# EUROPÄISCHE PATENTSCHRIFT

(11) **EP 3 068 955 B1**
(45) Veröffentlichungstag und Bekanntmachung des Hinweises auf die Patenterteilung: **22.12.2021**
(21) Anmeldenummer: 14802317.9
(22) Anmeldetag: 04.11.2014
(51) Int. Cl.: E04B 1/41, E04B 1/04, F16B 37/04

(54) **VERBINDUNGSANORDNUNG UND VERFAHREN ZUM VERBINDEN VON BETONFERTIGTEILE**
CONNECTION ARRANGEMENT AND METHOD OF CONNECTING PREFABRICATED CONCRETE ELEMENTS
AGENCEMENT DE LIAISON ET PROCÉDÉ DE LIAISON DES ÉLÉMENTS PREFABRIQUÉS EN BÉTON

(30) Priorität: 13.11.2013 EP 13192671; 06.03.2014 EP 14158019
(43) Veröffentlichungstag der Anmeldung: 21.09.2016
(73) Patentinhaber: PreConTech Precast Concrete Technology e.K., 65468 Trebur (DE)
(72) Erfinder: RAUSCH, Dieter, 65468 Trebur (DE)
(74) Vertreter: Weilnau, Carsten
(86) Internationale Anmeldenummer: PCT/EP2014/002948
(87) Internationale Veröffentlichungsnummer: WO 2015/070956

(56) Entgegenhaltungen:
- EP-A1- 0 400 588
- EP-A1- 0 943 742
- EP-A2- 1 217 136
- DE-A1- 2 330 675
- DE-A1- 19 949 694
- DE-C1- 19 757 089
- DE-U1- 7 703 213
- DE-U1-202006 018 108
- US-A- 1 172 664
- US-A- 2 652 713

## Beschreibung

### Technisches Gebiet

Die vorliegende Erfindung betrifft eine Verbindungsanordnung sowie ein Verbindungssystem zum Verbinden von zumindest zwei Betonfertigteilen. Darüber hinaus betrifft die Erfindung eine zumindest zwei Betonfertigteile umfassende Betonfertigteilanordnung, deren Betonfertigteile mittels des Verbindungssystems miteinander verbunden sind. Zudem betrifft die Erfindung ein Verfahren zum Verbinden von Betonfertigteilen.

### Hintergrund

Die Verwendung vorkonfigurierter bzw. maßgefertigter Betonfertigteile, insbesondere von Stahlbetonwand- oder Deckenelementen ist für die effiziente und zügige Errichtung von Bauwerken weit verbreitet. Für die Errichtung von Betonwänden finden vielfach Doppelwandelemente Verwendung, die einen mehrschaligen, insbesondere zweischaligen Aufbau aufweisen. Typischerweise sind hierbei zwei Betonschalen unter Bildung eines zwischen den Schalen liegenden Hohlraums über Gitterträger oder dergleichen Verbindungsmittel miteinander verbunden. Solch vorgefertigte Doppelwandelemente werden mittels geeigneter Hebezeuge, wie zum Beispiel Kränen, auf einer Baustelle positioniert. Der zwischen den Schalen liegende Hohlraum wird nach einer Installation sämtlicher Doppelwandelemente einer Gebäudewand mit Ort- oder Transportbeton verfüllt. Anstelle zwei- oder mehrschaliger Betonfertigteile können auch massive Wandteile, so etwa als Nullwand ausgestaltete Betonfertigteile für die Errichtung von Wänden Verwendung finden. Nullwände weisen typischerweise einen massiven und weitgehend hohlraumfreien Aufbau auf.

Für die Installation und Montage mehrerer aneinander angrenzender Wandelemente auf Basis von Betonfertigteilen ist es erforderlich, die einzelnen Betonfertigteile jeweils gesondert zu positionieren und gegen Umfallen zu sichern. Die sich unweigerlich zwischen aneinander angrenzenden Betonfertigteilen bildende Fuge ist dann beidseits mit einer Schalung zu versehen. Die Fuge, welche eine Fugenbreite im Bereich von 10 cm und mehr aufweisen kann, ist mit einer Füllmasse, ggf. auch mit Ortbeton gesondert zu verfüllen.

So ist beispielsweise aus der EP 1 217 136 A2 eine Ankervorrichtung für vorgefertigte Betonkomponenten bekannt. Aus der EP 0 943 742 A1 ist ein Panelelement mit einem konkaven Verbindungselement bekannt, welches in eine obere Endfläche des Panelkörpers eingelassen ist. Ferner beschreibt die DE 77 03 213 U1 einen Fundament- oder Deckenanker. Schließlich sind aus der DE 20 2006 018 108 U1 eine Ankerschraube für Befestigungsklemmen an Profilschienen und aus der EP 0 400 588 A1 ein Stauchanker für Ankerschienen bekannt.

Demgegenüber liegt nun die Aufgabe zugrunde, eine Verbindungsanordnung bzw. ein Verbindungssystem zur Verfügung zu stellen, welches eine einfache und sichere wechselseitige Verbindung aneinander angrenzender Betonfertigteile, insbesondere von Wand-Betonfertigteilen ermöglicht. Die Verbindungsanordnung und das Verbindungssystem soll hierbei die aneinander angrenzenden bzw. benachbart zueinander angeordneten Betonfertigteile lastübertragend miteinander koppeln. Das Verbindungssystem soll zudem eine intuitive, zügige und sichere Verbindung benachbarter Betonfertigteile ermöglichen und zu einer Reduzierung des Fugenmaßes beitragen.

### Erfindung und vorteilhafte Ausgestaltungen

Diese Aufgabe wird mit einer Verbindungsanordnung, mit einem Verbindungssystem, einer Betonfertigteilanordnung sowie mit einem Verfahren zum Verbinden von Betonfertigteilen gemäß den Merkmalen der unabhängigen Patentansprüche gelöst.

Vorteilhafte Ausgestaltungen sind dabei jeweils Gegenstand abhängiger Patentansprüche.

Es ist insoweit eine Verbindungsanordnung zum Verbinden von zumindest zwei, jeweils mit zumindest einer Ankerschiene versehenen Betonfertigteilen vorgesehen. Die Verbindungsanordnung weist dabei einen längserstreckten Schaft mit einem an einem ersten Längsende des Schafts angeordneten und gegenüber dem Schaftdurchmesser verbreiterten ersten Kopf auf. An einem zweiten Längsende des Schafts, welches dem ersten Längsende gegenüberliegt, weist die Verbindungsanordnung einen gegenüber dem Schaftdurchmesser verbreiterten zweiten Kopf auf.

Die Verbindungsanordnung ist mit ihrem ersten Kopf in die erste, an einem ersten Betonfertigteil verankerte Ankerschiene einführbar. Die Verbindungsanordnung ist ferner mit ihrem zweiten Kopf in eine zweite Ankerschiene einführbar, welche an einem zweiten Betonfertigteil verankert, bzw. in dem zweiten Betonfertigteil eingebettet ist. Der längserstreckte Schaft der Verbindungsanordnung erstreckt sich alsdann in Montagestellung am ersten und zweiten Betonfertigteil, bzw. an deren ersten und zweiten Ankerschiene zwischen den beiden Ankerschienen. Dadurch, dass der erste und der zweite Kopf typischerweise jeweils erste und zweite, jeweils nach innen ragende Schenkelabschnitte von erster und zweiter Ankerschiene hintergreifen, kann die Verbindungsanordnung zumindest eine zugstabile Verbindung von erstem und zweiten Betonfertigteil bereitstellen.

Der erste und der zweite Kopf sind dabei starr mit dem Schaft verbunden. Zumindest einer von erstem und zweitem Kopf ist fest bzw. einstückig mit dem Schaft der Verbindungsanordnung verbunden.

Dem ersten Kopf ist ferner ein erstes Abstützelement und ein erstes Fixierelement zugeordnet. Dem zweiten Kopf ist ein zweites Abstützelement und ein zweites Fixierelement zugeordnet. Die Abstützelemente sind als eine entlang dem Schaft verschiebbare Scheibe mit einem Durchgangsloch zur Aufnahme des Schafts ausgebildet. Das erste und das zweite Fixierelement sind ferner als Schraubenmutter ausgebildet und wirken mit einem Außengewinde des Schafts zusammen.

Das Abstützelement weist typischerweise eine Radialerstreckung auf, die mit der senkrecht zum Schaft verlaufenden Querschnittsebene des betreffenden Kopfs korrespondiert.

So ist dem ersten Kopf das erste Abstützelement mit dem ersten Fixierelement zugeordnet und dem zweiten Kopf ist das zweite Abstützelement mit dem zweiten Fixierelement zugeordnet. Auf diese Art und Weise können beide Köpfe, sowohl axial als auch radial an der Ankerschiene befestigt werden. Es kann hierdurch eine axiale als auch radiale wechselseitige Sicherung und Befestigung der mit betreffenden Ankerschienen versehenen und benachbart zueinander angeordneten Betonfertigteile bereitgestellt werden.

Es ist hierdurch insbesondere eine mechanische lastenübertragende Verbindung benachbart zueinander positionierter Betonfertigteile realisierbar, sodass zum Beispiel die für einen Wandaufbau vorgesehenen und nebeneinander positionierten Betonfertigteile nicht jeweils gesondert gegen Umfallen mehr zu sichern sind. Je nach Größe, Anzahl und mechanischer Belastbarkeit der Verbindungsanordnung ist denkbar, dass zum Beispiel nur noch ein einziges oder einzelne ausgewählte Wandelemente gesondert gegen Umfallen zu sichern sind, während hieran angrenzende oder dazwischen befindliche Wandelemente ausschließlich über die Verbindungsanordnung sicher in ihrer aufgestellten Position gehalten werden. Für derartige Wandelemente müssen insoweit keine gesonderten Stützen oder Absicherungsmaßnahmen getroffen werden, sodass der Montageaufwand dementsprechend reduziert werden kann.

Nach einer Weiterbildung ist vorgesehen, dass zumindest einer von erstem und zweitem Kopf in einer senkrecht zum Schaft verlaufenden Querschnittsebene eine Länge (I) aufweist, die größer ist als eine sich hierzu senkrecht in der Querschnittsebene erstreckende Breite (b). Insbesondere kann der Kopf in der senkrecht zum Schaft verlaufenden Querschnittsebene eine rechteckige oder dreieckige Geometrie aufweisen, die das Einführen des Kopfs in die Ankerschiene in einer ersten vorgegebenen Ausrichtung ermöglicht.

Nach einem Einführen eines Kopfs in eine entsprechende Ankerschiene kann zum Beispiel durch Drehen des Kopfs bezüglich einer mit der Längsachse des Schafts zusammenfallenden Drehachse der Kopf innerhalb der Ankerschiene gedreht werden, sodass dieser bezüglich einer im Wesentlichen in Längsrichtung des Schafts verlaufenden Axialrichtung gegenüber der betreffenden Ankerschiene fixierbar ist. So ist insbesondere denkbar, dass zumindest einer der beiden Köpfe, zum Beispiel eine rechteckige Querschnittsgeometrie aufweist, deren Breite schmaler ist als die lichte Weite eines Führungsschlitzes der Ankerschiene.

In einer entlang des Führungsschlitzes der Ankerschiene orientierten ersten Ausrichtung kann der betreffende Kopf in die Ankerschiene eingeführt, mithin durch den Führungsschlitz der Ankerschiene hindurchgeführt und anschließend um einen vorgegebenen Winkel mit dem Schaft als Drehachse gedreht werden. Bei einem rechteckig ausgestalteten Kopf kann der Kopf etwa um 90° gedreht werden. Die Längsenden des Kopfes gelangen dabei in einen Hinterschneidungsbereich der Ankerschiene, sodass der Kopf zumindest hinsichtlich einer Zugbelastung gegenüber der Ankerschiene gesichert ist.

Abweichend von einer zum Beispiel rechteckigen oder dreieckigen Querschnittsgeometrie ist aber auch denkbar, dass zumindest einer von erstem und zweitem Kopf eine radialsymmetrische, etwa eine kreisrunde oder ovale Querschnittsgeometrie aufweist. Darüber hinaus sind auch quadratische Querschnittsgeometrien des Kopfs senkrecht zum Schaft denkbar. Für das Verbinden der zumindest zwei Betonfertigteile ist es grundsätzlich ausreichend, wenn wenigstens einer der Köpfe der Verbindungsanordnung eine, bezogen auf den radialen Schaftmittelpunkt asymmetrische Querschnittsgeometrie aufweist. Das heißt, die Querschnittskontur des zumindest einen Kopfs der Verbindungsanordnung ist, bezogen auf das radiale Zentrum des Schafts bzw. bezogen auf die vom Schaft gebildete Drehachse nicht rotations- oder punktsymmetrisch, sondern allenfalls spiegelsymmetrisch bezüglich einer durch den Schaftmittelpunkt verlaufenden gedachten Querschnittslinie.

Der andere Kopf der Verbindungsanordnung kann demgegenüber eine symmetrische, auch radialsymmetrische oder punktsymmetrische Querschnittskontur aufweisen. In diesem Fall sind die gegenüberliegenden ersten und zweiten Köpfe der Verbindungsanordnung unterschiedlich ausgestaltet. Eine gleichartige Geometrie beider Köpfe ist hingegen insbesondere dann vorgesehen, wenn beide Köpfe eine von einer Radial- oder Punktsymmetrie abweichende Querschnittskontur aufweisen.

Typischerweise erstreckt sich das Abstützelement in radialer Richtung über die Länge (I) des jeweils zugeordneten Kopfs. Das Abstützelement kann eine radialsymmetrische Kontur aufweisen. Unabhängig von seiner geometrischen Ausgestaltung verbleibt das Abstützelement in einer Endmontagestellung außerhalb der betreffenden Ankerschiene und stützt sich axial, das heißt in Längsrichtung des Schafts an der jeweiligen Ankerschiene ab. Mittels dem entlang des Schafts verschiebbaren Abstützelements können nicht nur Zug-, sondern auch Druckkräfte zwischen den Ankerschienen bzw. zwischen den die Ankerschienen aufweisenden Betonfertigteilen übertragen werden.

Indem das Abstützelement eine vergleichsweise große Abstützfläche aufweist, kann es sich dementsprechend großflächig an der Ankerschiene abstützen und somit dazu beitragen, etwaige Punktbelastungen zwischen Verbindungsanordnung und Ankerschiene zu reduzieren. Das Abstützelement trägt insoweit zu einer gleichmäßigen bzw. räumlich gleich verteilten Kraftverteilung zwischen Ankerschiene und Schaft bei.

Das Abstützelement kann etwa in Form einer Unterlegscheibe ausgestaltet sein, deren Durchgangsloch vom Schaft durchsetzt ist. Das Abstützelement ist dabei radial am Schaft befestigt, kann aber axial, das heißt in Schaftlängsrichtung, entlang des Schafts beweglich angeordnet sein.

Nach einer weiteren Ausgestaltung sind das erste und zweite Fixierelement entlang dem Schaft beweglich und am Schaft fixierbar. Das jeweilige Fixierelement kann dabei insbesondere mit dem Abstützelement zusammenwirken. Es ist insbesondere denkbar, dass die Verbindungsanordnung jeweils zwei Abstützelemente als auch jeweils zwei Fixierelemente aufweist, die jeweils dem ersten und dem zweiten Kopf gesondert zugeordnet sind. Der erste Kopf markiert typischerweise das erste Längsende der Verbindungsanordnung. Axial hieran angrenzend ist beispielsweise das erste Abstützelement am Schaft angeordnet. Axial angrenzend, das heißt an der dem ersten Kopf abgewandten Seite des ersten Abstützelements ist typischerweise das erste Fixierelement am Schaft angeordnet. Auf der gegenüberliegenden Seite der Verbindungsanordnung kann eine dementsprechende Anordnung von axial innen nach axial außen vorgesehen sein.

Axial benachbart zum ersten Fixierelement ist das zweite Fixierelement vorgesehen. An der dem ersten Fixierelement abgewandten Seite des zweiten Fixierelements ist das zweite Abstützelement am Schaft vorgesehen. Das zweite Längsende des Schafts kann alsdann mit dem zweiten Kopf versehen sein. Die Anordnung der einzelnen Komponenten der Verbindungsanordnung kann insoweit folgenden axialen Aufbau aufweisen: erster Kopf, erstes Abstützelement, erstes Fixierelement, zweites Fixierelement, zweites Abstützelement, zweiter Kopf.

Mittels dem am Schaft axial fixierbaren Fixierelement kann eine klemmende wechselseitige Befestigung von Verbindungsanordnung und zumindest einer Ankerschiene herbeigeführt werden. So ist denkbar, dass die den Schaft der Verbindungsanordnung zumindest bereichsweise umschließenden Schenkel der Ankerschiene axial zwischen zum Beispiel dem ersten Kopf und dem ersten Abstützelement einklemmbar sind. Je nach Ausgestaltung der Verbindungsanordnung kann selbiges auch für die Anordnung und Befestigung der Verbindungsanordnung an der zweiten Ankerschiene vorgesehen sein.

Es ist insbesondere von Vorteil, wenn der Schaft zumindest bereichsweise mit einem Außengewinde versehen ist, welches mit dem Innengewinde des als Schraubenmutter ausgebildeten Fixierelements zusammenwirkt.

Die Schraubenmutter kann eine äußere Schlüsselfläche aufweisen oder aber auch als Flügelmutter ausgebildet sein. Somit kann entweder unter Zuhilfenahme eines Werkzeuges eine axiale und/oder auch bezogen auf die Längserstreckung des Schafts radiale Fixierung der Verbindungsanordnung an zumindest einer Ankerschiene erfolgen. Insbesondere bei Ausgestaltung einer Flügelmutter ist sogar eine werkzeugfreie Montage oder Vormontage der Verbindungsanordnung an einer Ankerschiene eines Betonfertigteils denkbar.

Nach einer weiteren Ausgestaltung ist der Schaft der Verbindungsanordnung zug- und druckstabil ausgebildet. Der Schaft ist insbesondere verwindungssteif ausgestaltet. Er kann zum Beispiel in Form eines Metallbolzens ausgebildet sein. Auch kann der Schaft aus einem hochfesten Material, wie zum Beispiel Stahl, insbesondere verzinktem Stahl oder aus Edelstahl gefertigt sein. Die zug- und druckstabile Ausgestaltung des Schafts als auch die feste Verbindung der Köpfe am Schaft ermöglicht eine Übertragung von Zug- und Druckkräften zwischen Betonfertigteilen, die mittels zumindest einer zuvor beschriebenen Verbindungsanordnung miteinander zug- und druckfest verbunden sind.

Eine druckstabile bzw. druckfeste Verbindung zwischen den Betonfertigteilen kann insbesondere dann erreicht werden, wenn beide Köpfe der Verbindungsanordnung mittels erstem und zweitem Abstützelement als auch mittels erstem und zweitem Fixierelement jeweils axial und somit auch radial bzw. bezüglich ein der Längserstreckung der betreffenden Ankerschienen fixiert sind.

Nach einer weiteren, nicht erfindungsgemäßen Ausgestaltung weist die Verbindungsanordnung eine Querverbinderanordnung auf, die einen sich quer oder senkrecht zum Schaft erstreckenden Querverbinder mit einem mit dem Schaft in Eingriff bringbaren Halteabschnitt aufweist. Der Querverbinder weist neben dem Halteabschnitt einen Verbindungsabschnitt zum Verbinden des Querverbinders etwa mit einem weiteren Betonfertigteil auf. Halteabschnitt und Verbindungsabschnitt sind typischerweise einstückig ausgebildet. Der Querverbinder ist insoweit einteilig ausgestaltet.

Mittels des Halteabschnitts ist der Querverbinder insbesondere lösbar am Schaft der Verbindungsanordnung anordenbar. Dies ermöglicht eine nachträgliche Montage des Querverbinders an einem Schaft der Verbindungsanordnung, welche bereits erste und zweite Betonteile miteinander koppelt oder verbindet. Der Querverbinder eignet sich insbesondere zur nachträglichen Befestigung an der Verbindungsanordnung. Sind mittels der Verbindungsanordnung bereits etwa zwei zu einer Außenwand eines Gebäudes gehörige Betonfertigteile miteinander verbunden, so kann mittels der Querverbinderanordnung, mithin mit deren Querverbinder, eine Zwischen- oder Innenwand mit den zur Außenwand gehörigen Betonfertigteilen besonders einfach, intuitiv und zügig verbunden und hieran zumindest lagestabil befestigt werden.

Der Halteabschnitt des Querverbinders ist typischerweise als Haken ausgebildet, welcher in den Schaft der Verbindungsanordnung einhängbar ist. Der Halteabschnitt ist jedoch keineswegs nur auf hakenartige Ausgestaltungen beschränkt. Er kann beispielsweise auch nach Art einer Halteklammer oder schlaufenartig und flexibel ausgestaltet sein, sodass er beispielsweise um den Schaft geschlungen werden kann.

Nach einer weiteren Ausgestaltung weist die Querverbinderanordnung neben dem Querverbinder ein Verankerungsteil mit einem Verbindungsschaft und mit einem gegenüber dem Verbindungsschaft verbreiterten dritten Kopf auf. Der Verbindungsschaft ist lösbar mit dem Verbindungsabschnitt des Querverbinders verbindbar.

Der dritte Kopf, welcher dem Verbindungsschaft abgewandt am Verankerungsteil vorgesehen ist, kann mit einem vorkonfigurierten Betonfertigteil formschlüssig verbunden werden. Beispielsweise kann der radial verbreiterte dritte Kopf in eine in ein drittes Betonfertigteil eingelassene dritte Ankerschiene eingeführt werden. Ein drittes Betonfertigteil, welches beispielsweise senkrecht oder unter einem vorgegebenen Winkel zu einem von erstem und zweitem Betonfertigteil ausgerichtet sein kann, ist durch die Verankerung des dritten Kopf am dritten Betonfertigteil, durch die Verbindung des Verbindungsschafts des Verankerungsteils mit dem Verbindungsabschnitt des Querverbinders sowie durch das In-Eingriff-Bringen des Halteabschnitts des Querverbinders am Schaft der Verbindungsanordnung mit dem ersten und dem zweiten Betonfertigteil verbindbar.

Es ist hierbei insbesondere vorgesehen, dass der Verbindungsschaft des Verankerungsteils auch erst nach einem Vergießen einer Fuge zwischen erstem und zweitem Betonfertigteil mit dem aus der Fuge hervorstehenden Verbindungsabschnitt des Querverbinders verbindbar ist. Auf diese Art und Weise kann eine nachträglichen Montage des dritten Betonfertigteils an bereits bauseits montierten und mit Füllmasse oder Ortbeton versehenen ersten und zweiten Betonfertigteilen erfolgen. Es kann hierbei vorgesehen werden, dass der Verbindungsschaft des Verankerungsteils vor Montage und vor einem Aufstellen und Positionieren des dritten Betonfertigteils mit dem Verbindungsabschnitt des Querverbinders zu verbinden bzw. daran anzuordnen ist. Der dritte Kopf, welcher typischerweise unlösbar mit dem Verbindungsschaft verbunden ist, kann alsdann im Zuge der Montage bzw. einer bauseitigen Positionierung des dritten Betonfertigteils mit dem dritten Betonfertigteil in Eingriff gebracht werden.

Nach einer weiteren Ausgestaltung ist der Verbindungsschaft des Verankerungsteils längenveränderlich mit dem Verbindungsabschnitt des Querverbinders verbindbar. Auf diese Art und Weise können nicht nur Bauteiltoleranzen der Betonfertigbauteile ausgeglichen werden, sondern es können auch beispielsweise Fugen- und Spaltmaße zwischen dem dritten Betonfertigbauteil und zumindest einem von erstem und zweitem Betonfertigbauteil bedarfsgerecht angepasst und verändert werden.

Die längenveränderliche Verbindung von Verbindungsschaft und Verbindungsabschnitt ist insbesondere kontinuierlich und stufenlos veränderbar. Es ist insbesondere vorgesehen, dass der Verbindungsabschnitt und der Verbindungsschaft mit einander korrespondierenden Gewindeabschnitten versehen sind, sodass beispielsweise das Verankerungsteil mit einem Verbindungsschaft auf einen Gewindeabschnitt des Verbindungsabschnitts des Querverbinders aufschraubbar oder in einen entsprechenden Gewindeabschnitt einschraubbar ist.

Typischerweise weist der Verbindungsschaft eine hohlzylindrische Geometrie mit einem Innengewinde auf, der auf ein Außengewinde des Verbindungsabschnitts des Querverbinders aufschraubbar ist. Eine umgekehrte Konstellation ist hierbei aber ebenfalls denkbar, wobei der Verbindungsschaft ein Außengewinde und der Verbindungsabschnitt ein hierauf aufschraubbares Innengewinde aufweist.

Nach einer Weiterbildung ist an dem Verbindungsschaft oder am Verbindungsabschnitt eine sich mit ihrer Flächennormale parallel zur Längserstreckung von Verbindungsschaft oder Verbindungsabschnitt erstreckende Platte variabel arretierbar. Die Platte dient insbesondere zur Vormontage und zur Lagefixierung des Querverbinders vor, während und/oder nach einem Verfüllen der zwischen erstem und zweitem Betonfertigbauteil vorgesehenen Fuge mit Füllmasse. Die Platte gelangt insbesondere an einer Außen- oder Innenseite beider Betonfertigteile zur Anlage, welche über den Schaft der Verbindungsanordnung miteinander gekoppelt bzw. miteinander verbunden sind.

Da der Querverbinder mit seinem Halteabschnitt typischerweise nur punktuell am Schaft der Verbindungsanordnung angreift, bzw. daran eingehängt ist, kann durch die variable Arretierung seines Verbindungsabschnitts an der Platte eine Art Fixierung des Querverbinders an den bereits bauseits montierten ersten und zweiten Betonfertigbauteilen erreicht werden.

Insbesondere kann der Querverbinder in etwa horizontal vom Schaft der Verbindungsanordnung abragen und in etwa parallel zur Flächennormale der typischerweise planar und eben ausgestalteten Betonfertigteile aus der sich zwischen den beiden Betonfertigbauteilen erstreckenden Fuge bzw. aus einem entsprechenden Freiraum herausragen. Indem sich die mit dem Verbindungsabschnitt verbundene Platte unmittelbar an einer Außen- oder Innenseite der Betonfertigteile abstützt, kann der horizontal ausgerichtete Querverbinder entgegen der Schwerkraft in seiner horizontalen Lage gehalten werden.

Ein Herunterfallen des Querverbinders, welches typischerweise mit einer nach unten gerichteten Schwenkbewegung seines Verbindungsabschnitts bzw. seines freien Endes verbunden wäre, ist durch die Arretierung der Platte am Verbindungsabschnitt und durch deren Anlage an beiden Betonfertigbauteilen effektiv verhindert. Hierzu müsste die Platte gegenüber dem Verbindungsabschnitt weiter zu dessen freien Ende bewegbar sein.

Die mit dem Verbindungsabschnitt verbindbare bzw. die hieran arretierbare Platte kann ferner auch als eine Art Schalung für den Zwischenraum zwischen erstem und zweitem Betonfertigbauteil fungieren. Hiermit kann ferner sichergestellt werden, dass der durch die Platte hindurchführbare Verbindungsabschnitt, insbesondere der von der Platte in Richtung zum dritten Betonfertigbauteil ragende Verbindungsabschnitt, bei einem vorzeitigen Füllen der Fuge zwischen erstem und zweitem Betonfertigbauteil frei von Füllmasse oder Ortbeton bleibt.

Auf diese Art und Weise kann sichergestellt werden, dass der Verbindungsabschnitt auch nach einem Vergießen des Spalts zwischen erstem und zweitem Betonfertigbauteil problemlos mit dem Verbindungsschaft des Verankerungsteils verbindbar ist.

Die Platte weist typischerweise eine Durchgangsöffnung auf, die passgenau an die Geometrie des Verbindungsabschnitts angepasst ist. Die Platte kann insbesondere als Kunststoffplatte ausgestaltet sein, die etwa auf das Außengewinde des Verbindungsabschnitts aufschiebbar oder aufschraubbar ist. Bei einer auf das Außengewinde des Verbindungsabschnitts aufschiebbaren Ausgestaltung kann die Platte beispielsweise nach Art einer Ratsche über die einzelnen Gewindegänge des Verbindungsabschnitts geschoben werden. Die Platte bzw. der die Platte bildende Kunststoff eine hierfür ausreichende Flexibilität und Elastizität auf.

Alternativ hierzu kann natürlich vorgesehen sein, dass die Platte im Bereich der Öffnungsberandung ihrer Durchgangsöffnung verstellbare oder lösbare Klemm- oder Rastelemente aufweist, die das Gewinde der Verbindungsanordnung oder im Bedarfsfall auch einem vergleichsweise glatt ausgebildeten Abschnitt der Verbindungsanordnung einfassen oder zumindest bereichsweise lösbar umfassen. Es ist insbesondere vorgesehen, dass die Platten längenveränderlich bzw. positionsveränderlich entlang dem Verbindungsabschnitt des Querverbinders arretierbar und fixierbar ist. Bei einer Schraubverbindung kann insbesondere ein stufenloses und kontinuierliches Verstellen der Platte am Verbindungsabschnitt des Querverbinders erfolgen.

In einem weiteren Aspekt betrifft die Erfindung ferner ein Verbindungssystem zum Verbinden von zumindest zwei Betonfertigteilen. Das Verbindungssystem weist eine in oder an einem ersten Betonfertigteil verankerbare erste Ankerschiene sowie eine zweite Ankerschiene auf, die gleichermaßen in oder an einem zweiten Betonfertigteil verankerbar ist. Des Weiteren weist das Verbindungssystem zumindest eine zuvor beschriebene Verbindungsanordnung auf, deren erster Kopf in die erste Ankerschiene einführbar ist und deren zweiter Kopf in die zweite Ankerschiene einführbar ist.

Es ist hierbei insbesondere vorgesehen, dass die Verbindungsanordnung zum Beispiel mit ihrem ersten Kopf in der ersten Ankerschiene vormontierbar ist. Der erste Kopf kann beispielsweise bereits vor oder während der Verankerung der Ankerschiene im oder am ersten Betonfertigteil in die erste Ankerschiene eingeführt werden. Es ist aber auch denkbar, dass die Verbindungsanordnung mit ihrem ersten Kopf nach oder während einer Montage bzw. nach oder während einem Aufstellen des ersten Betonfertigteils in die erste Ankerschiene einführbar und bevorzugt an einer vorgegebenen Position an der ersten Ankerschiene vorübergehend fixierbar ist.

Insoweit kann das erste Betonfertigteil vor oder nach einem Erreichen einer bauseitigen Montageposition mit der Verbindungsanordnung versehen werden. Das Einführen des zweiten Kopfs der Verbindungsanordnung erfolgt nach einem hiernach erfolgenden bauseitigen Positionieren des zweiten Betonfertigteils. Erste und zweite Ankerschiene sind jeweils an vorgegebenen und in Endmontagestellung einander zugewandten Positionen von erstem und zweitem Betonfertigteil angeordnet, sodass der zweite Kopf der Verbindungsanordnung unmittelbar nach Positionieren des zweiten Betonfertigteils in die zweite Ankerschiene einführbar ist.

Nach einer Weiterbildung hiervon weisen die erste Ankerschiene und die zweite Ankerschiene jeweils einen sich zwischen zwei nach innen ragenden Schenkelabschnitten erstreckenden Führungsschlitz auf. Die Breite jenes Führungsschlitzes, das heißt die Erstreckung, bzw. die lichte Weite des Schlitzes senkrecht zur Längsrichtung der Ankerschiene ist dabei kleiner als ein Querschnitt des ersten und des zweiten Kopfs der Verbindungsanordnung. Insbesondere ist vorgesehen, dass bei einem etwa rechteckig ausgestalteten Kopf die Schlitzbreite des Führungsschlitzes der betreffenden Ankerschiene kleiner ist als die lange Seite des rechteckigen Kopfs.

Hierbei kann gleichermaßen vorgesehen sein, dass die Schlitzbreite (s) jedoch größer ist als die kurze Seite, mithin die Breite (b) des Kopfs. Auf diese Art und Weise kann erreicht werden, dass zum Beispiel der rechteckig ausgestaltete erste Kopf in einer Ausrichtung parallel zur Längserstreckung der Ankerschiene bzw. parallel zur Schlitzerstreckung in den Schlitz und somit in die Ankerschiene einführbar ist und mit Erreichen einer axialen Einführ- oder Montageposition um einen vorgegebenen Winkel um den Schaft drehbar ist. Ein entgegen der Einführrichtung gerichtetes Herausziehen des Kopfs und somit der Verbindungsanordnung aus der ersten Ankerschiene ist dabei blockiert und verhindert. Die Verbindungsanordnung kann insoweit axial an der ersten Ankerschiene fixiert sein.

Nach einer weiteren Ausgestaltung weist der Führungsschlitz der zweiten Ankerschiene an zumindest einem Abschnitt eine Schlitzverbreiterung auf, deren Breite (z) größer ist als ein Querschnitt des zweiten Kopfs. Die Schlitzverbreiterung ist insbesondere derart breit, dass der zweite Kopf in jedweder Orientierung in Axialrichtung durch die Schlitzverbreiterung hindurchführbar ist. Jenes Hindurchführen durch die Schlitzverbreiterung kann insbesondere während der Montage des zweiten Betonfertigteils erfolgen. Sobald das zweite Betonfertigteil eine in Bezug auf das erste Betonfertigteil vorgesehene Endmontageposition erreicht, kann der zweite Kopf der Verbindungsanordnung bereits die Schlitzverbreiterung des Führungsschlitzes in Axialrichtung durchsetzt haben.

Mit Erreichen einer derartigen Montagestellung kann die Verbindungsanordnung alsdann in Längsrichtung beider Ankerschienen, welche typischerweise parallel zueinander verlaufen, bewegt werden, sodass der zweite Kopf aus der Schlitzverbreiterung heraus in einen gegenüber der Schlitzverbreiterung verjüngten oder verkleinerten Führungsschlitz zu liegen kommt, in welchem auch der zweite Kopf axial an der zweiten Ankerschiene, mithin am zweiten Betonfertigteil fixierbar ist.

Durch Vorsehen einer Schlitzverbreiterung im Führungsschlitz der zweiten Ankerschiene kann ein Einführen und Befestigen des zweiten Kopfs der Verbindungsanordnung an der zweiten Ankerschiene erfolgen, ohne dass hierfür die Verbindungsanordnung bzw. ihr zweiter Kopf gedreht oder verschwenkt werden müsste. Eine axiale Sicherung kann hierbei allein durch eine Längsverschiebung der Verbindungsanordnung entlang der Längsrichtung beider Ankerschienen erfolgen, wobei der zweite Kopf der Verbindungsanordnung aus der Schlitzverbreiterung heraus in einen gegenüber der Schlitzverbreiterung verjüngten Führungsschlitz übergeht, in welcher der zweite Kopf die den Führungsschlitz bildenden Schenkel der zweiten Ankerschiene hintergreift.

Nach einer weiteren Ausgestaltung ist die Schlitzverbreiterung der zweiten Ankerschiene an einem Längsende der zweiten Ankerschiene ausgebildet. die erste und die zweite Ankerschiene sind, bezogen auf die spätere Endmontageposition, betreffender erster und zweiter Betonfertigteile parallel zueinander in dem ersten bzw. dem zweiten Betonfertigteil angeordnet bzw. verankert. Es ist ferner denkbar und von Vorteil, wenn erste und zweite Ankerschiene auch auf gleicher Höhe, bzw. in Verbindungsrichtung betrachtet, im Wesentlichen überdeckend zueinander am ersten und am zweiten Betonfertigteil angeordnet sind.

Es ist insbesondere vorgesehen, dass bei als Wandelementen ausgestalteten Betonfertigteilen die Schlitzverbreiterung der zweiten Ankerschiene an einem oberen Längsende der Ankerschiene ausgebildet ist. Auf diese Art und Weise kann ein Längsverschieben der Verbindungsanordnung in der ersten und der zweiten Ankerschiene schwerkraftbedingt bzw. schwerkraftunterstützt erfolgen.

Montagetechnisch kann dabei insbesondere vorgesehen sein, dass die Verbindungsanordnung an einem oberen Endabschnitt der ersten Ankerschiene lösbar vormontiert ist.

Das obere Ende der ersten Ankerschiene kann ferner einen definierten Endanschlag für die Positionierung der Verbindungsanordnung an der ersten Ankerschiene bereitstellen. Sobald das zweite, mit der zweiten hiermit korrespondierend ausgestalteten Ankerschiene in Montageposition verbracht ist, kann die Arretierung der Verbindungsanordnung an der ersten Ankerschiene gelöst werden, sodass die Verbindungsanordnung mit beiden Ankerschienen in Eingriff stehend lediglich herunterfällt, bis sie an einem unteren Ende der ersten und zweiten Ankerschiene zu liegen kommt.

In jener Position, in welcher die erste Ankerschiene vom ersten Kopf hintergriffen und in welcher die zweite Ankerschiene vom zweiten Kopf hintergriffen ist, ergibt sich auch ohne jegliche weitere gesonderte Fixierung der Verbindungsanordnung an einer der Ankerschienen bereits eine axiale und wechselseitige Sicherung von erstem und zweitem Betonfertigteil; dies jedoch innerhalb der Bauteiltoleranzen und des geometrischen Spiels von erstem und/oder zweitem Kopf in der ersten und/oder zweiten Ankerschiene.

Nach einer weiteren Ausgestaltung weist zumindest eine der Ankerschienen im Bereich eines seitlichen Wangenabschnitts eine Ausnehmung zum seitlichen Einführen eines Kopfs einer Verbindungsanordnung auf. Die seitliche Ausnehmung kann dabei insbesondere an einem Längsende der Ankerschiene ausgestaltet sein. Beispielsweise kann der seitliche Wangenabschnitt und der hieran vorgesehene, nach innen ragende und den Führungsschlitz der Ankerschiene bildende Schenkelabschnitt entfernt sein.

Im Bereich der Ausnehmung wird auf diese Art und Weise eine seitliche Einführöffnung zum Einführen zumindest eines Kopfs einer Verbindungsanordnung bereitgestellt. Das seitliche Einführen kann insbesondere in montagetechnischer Hinsicht von Vorteil sein, dann nämlich, wenn die Ankerschienen etwa an einer Ecke eines Betonfertigteils angeordnet sind. Sofern aneinander angrenzende Ecken zweier Betonfertigteile in gleicher Höhe mit einer derartigen Ankerschiene versehen sind, kann mittels der Ausnehmung und der hiervon gebildeten Einführöffnung ein seitliches Einführen der Verbindungsanordnung auch nach einem Aufstellen und Positionieren entsprechender Betonfertigteile erfolgen.

Das Aufstellen und Platzieren der miteinander zu verbindenden Betonfertigteile kann zunächst ohne die Verbindungsanordnungen erfolgen, die unter Umständen bei einer Vormontage an zumindest einem der Betonfertigteile für die Positionierung und Ausrichtung weiterer hieran zu befestigender Betonfertigteile hinderlich sein könnten. Indem zumindest eine der Ankerschiene eine seitliche Ausnehmung im Bereich eines Wangenabschnitts aufweist, wird ein nachträgliches seitliches Einführen zumindest eines Kopfs der Verbindungsanordnung in die betreffende Ankerschiene ermöglicht.

Typischerweise befindet sich die Ausnehmung an einem in Montageposition des Betonfertigteils oberen Endabschnitt der Ankerschiene. Nach einem Einführen durch die Ausnehmung und in das Innenprofil der betreffenden Ankerschiene kann die Verbindungsanordnung unter Einwirkung der Gewichtskraft der Längsrichtung der Ankerschiene folgend nach unten in eine Endmontageposition verbracht werden, in welcher die Verbindungsanordnung mit ihren beiden Köpfen jeweils mit einer an je einem Betonfertigteil vorgesehenen Ankerschiene in Eingriff steht.

Nach einer weiteren Ausgestaltung hiervon weisen sowohl die erste Ankerschiene als auch die zweite Ankerschiene jeweils an aneinander zugewandten Wangenabschnitten je eine Ausnehmungen auf. Die beiden Ausnehmungen der zumindest zwei Ankerschienen ergänzen sich dabei zu einer Einführöffnung, in welche die gesamte Verbindungsanordnung seitlich einführbar ist. Es ist hierbei insbesondere vorgesehen, dass die Ausnehmungen erster und zweiter Ankerschiene an unmittelbar benachbart zueinander zu liegen kommenden Wangen- bzw. Schenkelabschnitten der betreffenden Ankerschienen ausgebildet sind.

Ferner ist vorgesehen, dass sich die beiden Ausnehmungen beider Ankerschienen zu einer gemeinsamen Einführöffnung ergänzen. Hinsichtlich ihrer Positionierung im jeweiligen Betonfertigteil und der relativen Positionierung der Betonfertigteile zueinander ist vorgesehen, dass die beiden Ausnehmungen erster und zweiter Ankerschienen in etwa in derselben Höhe zu liegen kommen, wenn die miteinander zu verbindenden Betonfertigteile ihre vorgesehene Montageposition einnehmen.

Bezüglich ihres Einbauorts am jeweiligen Betonfertigteil ist insbesondere vorgesehen, dass sowohl die erste als auch die zweite Ankerschiene in einem Eckbereich des Betonfertigteils angeordnet sind, sodass eine seitliche Zugänglichkeit der Ankerschienen gegeben ist. Es kann insbesondere vorgesehen sein, dass erste und zweite Ankerschienen jeweils an einer Innenecke von Betonfertigteilen angeordnet sind, die mit ihren seitlichen Stirnflächen aneinander angrenzen.

Nach einer weiteren Ausgestaltung ist die Verbindungsanordnung mit zumindest einem ihrer Köpfe mit der ersten und/oder mit an der zweiten Ankerschiene in Eingriff bringbar. Sie ist insbesondere mit ihren Köpfen an der ersten und/oder an der zweiten Ankerschiene fixierbar. Insbesondere wenn die Verbindungsanordnung mit zumindest einem Abstützelement und einem mit dem Abstützelement zusammenwirkenden Fixierelement versehen ist, kann nicht nur eine zug-, sondern auch eine druckstabile bzw. zug- und/oder druckübertragende Verbindung zwischen den Betonfertigteilen realisiert werden.

Zur Bildung einer besonders verwindungssteifen und unmittelbar kraft- und spielfrei übertragenden Verbindung von erstem und zweitem Betonfertigteil kann mit Erreichen jener Endmontageposition vorgesehen werden, den ersten als auch den zweiten Kopf jeweils unter Zuhilfenahme von erstem und zweitem Abstützelement sowie erstem und zweitem Fixierelement in Axialrichtung als auch bezüglich der Längsrichtung der Ankerschiene bzw. bezüglich der Radialrichtung des Schafts an den Ankerschienen zu fixieren.

Die so gebildete und unweigerlich noch existierende Fuge zwischen den benachbarten Betonfertigteilen kann alsdann mit Gießmasse ausgefüllt, ggf. auch ohne Schalung ausgespritzt werden.

Die Verwendung der Verbindungsanordnung mit zwei gegenüberliegenden, typischerweise als Hammerkopf ausgestalten Köpfen, ermöglicht die Realisierung von besonders kleinen Fugen, die weniger als 5 cm, weniger als 3 cm oder sogar weniger als 2 cm. In besonders vorteilhafter Ausgestaltung können Fugen von 10 bis 15 mm Fugenbreite zwischen den flächig aneinander angrenzenden Betonfertigteilen realisiert werden. Derart kleine Fugen können unter Umständen auch ohne Bereitstellung einer gesonderten Schalung lediglich ausgespritzt werden. Als Füllmaterial kommen hierfür insbesondere thixotrope Mörtel infrage.

Nach einem weiteren Aspekt betrifft die Erfindung ferner eine Betonfertigteilanordnung mit zumindest einem ersten Betonfertigteil und mit einem zweiten Betonfertigteil. Die beiden Betonfertigteile, typischerweise zwei Wandelemente, sind dabei mittels zumindest eines zuvor beschriebenen Verbindungssystems miteinander verbunden. Das erste Betonfertigteil weist dabei typischerweise an einer vorgegebenen Stelle, insbesondere an einer dem zweiten Betonfertigteil zugewandten Seite, zumindest eine erste Ankerschiene auf. Das zweite Betonfertigteil weist dementsprechend an einer dem ersten Betonfertigteil in Endmontagestellung zugewandten Seite eine zweite Ankerschiene auf.

Nach einer Weiterbildung der Betonfertigteilanordnung ist vorgesehen, dass die erste Ankerschiene in einem Eckabschnitt des ersten Betonfertigteils, und dass die zweite Ankerschiene im Eckabschnitt des zweiten Betonfertigteils angeordnet ist. Bezogen auf die vorgesehene Endmontagesituation erster und zweiter Betonfertigteile ist ferner vorgesehen, dass erste und zweite Ankerschienen in etwa in gleicher Höhe am ersten und zweiten Betonfertigteil angeordnet sind und bei Positionierung erster und zweiter Betonfertigteile unmittelbar gegenüberliegend in die einander zugewandten Stirnflächen erster und zweiter Betonfertigteile eingebettet sind.

Es ist dabei insbesondere vorgesehen, dass sowohl das erste als auch das zweite Betonfertigteil auf derselben Seite bzw. an unmittelbar einander zugewandten Wangenabschnitten je eine Ausnehmung zur Bildung einer gemeinsamen Einführöffnung für die Verbindungsanordnung aufweisen. Die Ausnehmung ist hierbei derart an den gegenüberliegenden Ankerschienen ausgestaltet, dass sie von einer Seite der beiden Betonfertigteile zugänglich sind. Auf diese Art und Weise können auch erst nach einem Aufstellen und Positionieren erster und zweiter Betonfertigteile entsprechende Verbindungsanordnungen mit ihren zumindest zwei Köpfen durch die von zwei Ankerschienen gebildete Einführöffnung mit ihren jeweiligen Köpfen in das Profilinnere der jeweiligen Ankerschienen verbracht und anschließend entlang der Längsrichtung der Ankerschienen in eine Endmontagekonfiguration bewegt werden.

Das Vorsehen zumindest einer seitlichen Ausnehmung einer Ankerschiene ermöglicht insoweit das nachträgliche und seitliche Einführen einer Verbindungsanordnung, nachdem die ersten und zweiten Betonfertigteile in eine Endmontagekonfiguration verbracht sind.

Nach einer weiteren Ausgestaltung weist die Betonfertigteilanordnung ein drittes Betonfertigbauteil auf, welches unter einem vorgegebenen Winkel, typischerweise senkrecht zu zumindest einem von erstem und zweitem Betonfertigbauteil positionierbar und mittels des Verbindungssystems bzw. mittels der Verbindungsanordnung mit dem ersten und dem zweiten Betonfertigbauteil verbindbar ist. Die Verbindungsanordnung ist dabei mit ihrem dritten Kopf mit einer dritten, in das dritte Betonfertigbauteil eingelassenen Ankerschiene in Eingriff bringbar. Sie ist insbesondere daran fixierbar.

Die beiden Ankerschienen sind während bzw. nach einem bauseitigen Positionieren mit zumindest einer zuvor beschriebenen Verbindungsanordnung miteinander verbindbar. Die Verbindungsanordnung ist dabei insbesondere zug- und druckübertragend ausgebildet. Sie selbst als auch ihre jeweilige Anordnung an der ersten und/oder an der zweiten Ankerschiene kann ferner verwindungssteif ausgestaltet sein. Auf diese Art und Weise wird es ermöglicht, dass lediglich zum Beispiel das erste Betonfertigteil gesondert gegen Umfallen abzustützen ist, während das zweite Betonfertigteil ohne gesonderte Abstützung, somit abstützungsfrei allein über das zuvor beschriebene Verbindungssystem mit dem ersten Betonfertigteil verbunden ist.

In einem weiteren Aspekt betrifft die Erfindung ferner ein Verfahren zum Verbinden eines ersten Betonfertigteils mit zumindest einem zweiten Betonfertigteil. Das Verfahren weist dabei die folgenden Schritte auf:
- Bereitstellen des ersten Betonfertigteils mit zumindest einer ersten darin verankerten Ankerschiene,
- Bereitstellen eines zweiten Betonfertigteils mit zumindest einer zweiten darin verankerten Ankerschiene,
- Verbinden von erstem und zweitem Betonfertigteil mittels zumindest einer zuvor beschriebenen Verbindungsanordnung, indem der erste Kopf der Verbindungsanordnung in die erste Ankerschiene und indem der zweite Kopf der Verbindungsanordnung in die zweite Ankerschiene eingeführt wird.

Das Einführen zumindest einer der Köpfe in die jeweiligen Ankerschienen kann hierbei vor, während, als auch nach dem Aufstellen bzw. Positionieren von erstem und/oder zweitem Betonfertigteil erfolgen. Typischerweise kann vorgesehen sein, dass die Verbindungsanordnung mit ihrem ersten Kopf bereits vor oder nach einem Positionieren des ersten Betonfertigteils in die erste Ankerschiene eingeführt und in einer vorgegebenen Position an der ersten Ankerschiene vorfixiert wird.

Die Positionierung und Fixierung der Verbindungsanordnung an der ersten Ankerschiene ist derart, dass das zweite Betonfertigteil direkt in eine vorgegebene Endmontageposition bringbar ist, in welcher der zweite Kopf der Verbindungsanordnung direkt in die zweite Ankerschiene eingeführt ist. Das Einführen des zweiten Kopfes in die zweite Ankerschiene erfolgt sozusagen mit Positionieren des zweiten Betonfertigteils relativ zum ersten Betonfertigteil. Typischerweise weist die zweite Ankerschiene zur Aufnahme des zweiten Kopfs eine Schlitzverbreiterung auf. Mit dem soeben beschriebenen Einführen des zweiten Kopfs in die zweite Ankerschiene ist der Kopf demgemäß noch nicht axial an der zweiten Ankerschiene fixiert.

Eine Fixierung der Verbindungsanordnung an der zweiten Ankerschiene kann durch eine Längsverschiebung der Verbindungsanordnung in Richtung der Längserstreckung der zweiten Ankerschiene erfolgen. Hierfür wird typischerweise die Vorfixierung der Verbindungsanordnung an der ersten Ankerschiene gelöst. Alsdann kann die Verbindungsanordnung entlang der Längserstreckung beider, sich typischerweise parallel zueinander erstreckender Ankerschienen bewegt werden, bevor zumindest einer, bevorzugt beide Köpfe der Verbindungsanordnung druck- und zugkraftübertragend mit der jeweiligen Ankerschiene, das heißt mit der ersten bzw. mit der zweiten Ankerschiene verbunden wird bzw. werden.

Das beschriebene Verfahren ist gleichermaßen auch für die Verbindung von drei oder Betonfertigteilen ausgelegt. In weiteren Verfahrensschritten kann z.B. mittels der Querverbinderanordnung ein mit einer Ankerschiene versehenes drittes Betonfertigteil an und mit ersten und zweiten Betonfertigteilen verbunden werden.

### Kurzbeschreibung der Figuren

Weitere Merkmale, Ziele sowie vorteilhafte Ausgestaltungen der vorliegenden Erfindung werden in der nachfolgenden Beschreibung eines Ausführungsbeispiels erläutert. Hierbei zeigen (wobei zu bemerken ist, dass Fig. 9 bis 13 eine nicht erfindungsgemäße Ausgestaltung betreffen):
- Fig. 1: eine Querschnittsdarstellung durch ein Gebäude mit einem als Betonfertigteil ausgestalteten Wandelement,
- Fig. 2: eine Draufsicht von oben auf zwei mittels des Verbindungssystems miteinander verbundene Betonfertigteile,
- Fig. 3: eine vergrößerte Darstellung des Verbindungssystems gemäß Fig. 2,
- Fig. 4: eine isolierte Draufsicht auf eine erste Ankerschiene,
- Fig. 5: eine isolierte Draufsicht auf eine zweite Ankerschiene,
- Fig. 6: eine perspektivische ausschnittsweise Darstellung der die erste und die zweite Ankerschiene miteinander verbindenden Verbindungsanordnung,
- Fig. 7a: eine schematische Darstellung der an einem ersten Betonfertigteil vormontierten Verbindungsanordnung während des Positionierens eines zweiten Betonfertigteils,
- Fig. 7b: eine schematische Darstellung der in die zweite Ankerschiene eingeführten Verbindungsanordnung,
- Fig. 7c: eine Endmontagestellung der Verbindungsanordnung an den Ankerschienen der beiden Betonfertigteile und
- Fig. 8: ein Flussdiagramm zur Beschreibung des erfindungsgemäßen Verbindungs- und Montageverfahrens,
- Fig. 9: eine Betonfertigteilanordnung unter Verwendung einer eine Querverbinderanordnung aufweisenden Verbindungsanordnung,
- Fig. 10: eine Draufsicht auf eine mit der Querverbinderanordnung verbindbaren Platte,
- Fig. 11: eine isolierte Seitenansicht des Querverbinders mit daran angeordneter Platte,
- Fig. 12: eine Seitenansicht eines Verankerungsteils der Querverbinderanordnung,
- Fig. 13: eine dritte, in ein drittes Betonfertigteil einzubettende Ankerschiene,
- Fig. 14: eine schematische Darstellung eines weiteren Ausführungsbeispiels mit Ankerschienen, die jeweils eine seitliche Ausnehmung aufweisen,
- Fig. 15: die Ausgestaltung gemäß Fig. 14, wobei die Verbindungsanordnung durch die seitlichen Ausnehmungen hindurch im Inneren der Ankerschienen positioniert ist,
- Fig. 16: eine Endmontagestellung der Verbindungsanordnung an den beiden Ankerschienen bzw. Betonfertigteilen und
- Fig. 17: einen Querschnitt durch die Verbindungsanordnung und Ankerschienen in der Konfiguration gemäß Fig. 16.

### Detaillierte Beschreibung

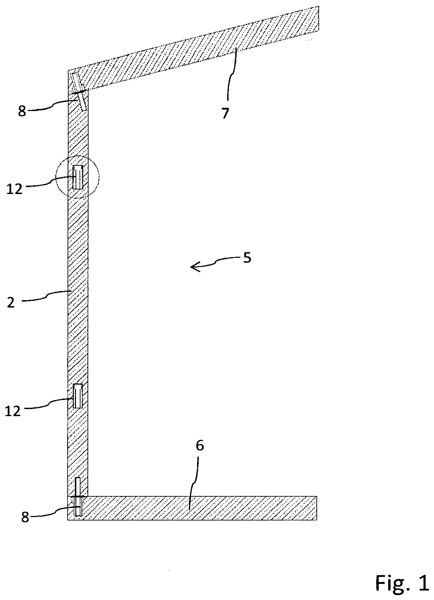

In Fig. 1 ist ein mit Betonfertigteilen zu errichtendes Gebäude 5 stark vereinfacht und schematisch dargestellt. Das Gebäude 5 weist ein als Bodenplatte ausgestaltetes Betonfertigteil 6, ein als Wandelement ausgestaltetes Betonfertigteil 2 sowie ein als Dach ausgestaltetes schräg zum Betonfertigteil 2 angeordnetes Betonfertigteil 7 auf.

Im Bereich des als Wandelement ausgestalteten Betonfertigteils 2 sind dem Betrachter zugewandt, das heißt im Bereich eines Seitenrands, zwei vertikal voneinander beabstandete Ankerschienen 12 angeordnet. Die Ankerschienen 12 sind typischerweise in das Betonfertigteil 2 eingelassen bzw. in dieses eingegossen und dementsprechend im Betonfertigteil 2 verankert. Für die Befestigung des Betonfertigteils 2 am als Bodenplatte ausgestalteten Betonfertigteil 6 ist eine Eckverbindungsanordnung 8 vorgesehen. Eine hiermit vergleichbare Eckverbindungsanordnung 8 ist im Übergangsbereich zwischen dem als Wandelement ausgestalteten Betonfertigteil 2 und dem als Dach oder Decke ausgestalteten Betonfertigteil 7 vorgesehen.

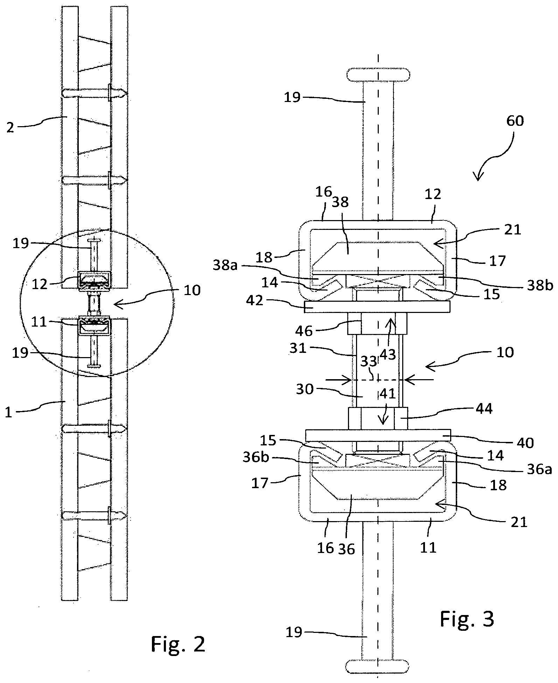

In Fig. 2 ist das nach der Erfindung vorgesehene Verbindungssystem 60 zur Verbindung zweier aneinander angrenzender Betonfertigteile 1, 2 im Querschnitt bzw. in einer Draufsicht von oben gezeigt. Das Verbindungssystem 60 weist eine erste Ankerschiene 11 sowie eine zweite Ankerschiene 12 auf. Die erste Ankerschiene 11 ist im ersten Betonfertigteil 1 verankert, während die zweite Ankerschiene 12 im zweiten Betonfertigteil 2 verankert ist. Die beiden Ankerschienen 11, 12 sind ferner mit einer Verbindungsanordnung 10 gekoppelt, die im Detail unter Bezugnahme auf die vergrößerte Darstellung gemäß Fig. 3 beschrieben ist.

Die Verbindungsanordnung 10 bzw. das Verbindungssystem ist insbesondere zum Verbinden von aufgestellten und als Wandelement ausgestalteten Betonfertigteilen 1, 2 ausgebildet. Die Ankerschienen 11, 12 sind in den aneinander zugewandten Seitenrändern, mithin in den seitlichen Stirnflächen der Betonfertigteile 1, 2 verankert bzw. ggf. auch flächenbündig in diese eingebettet. Die Ankerschienen 11, 12 weisen zum Zwecke der Verankerung in das jeweilige Betonfertigteil 1, 2 zumindest einen oder mehrere in Längsrichtung der jeweiligen Ankerschiene voneinander beabstandete Ankerabschnitte 19 mit einem radial verbreiterten Ende auf.

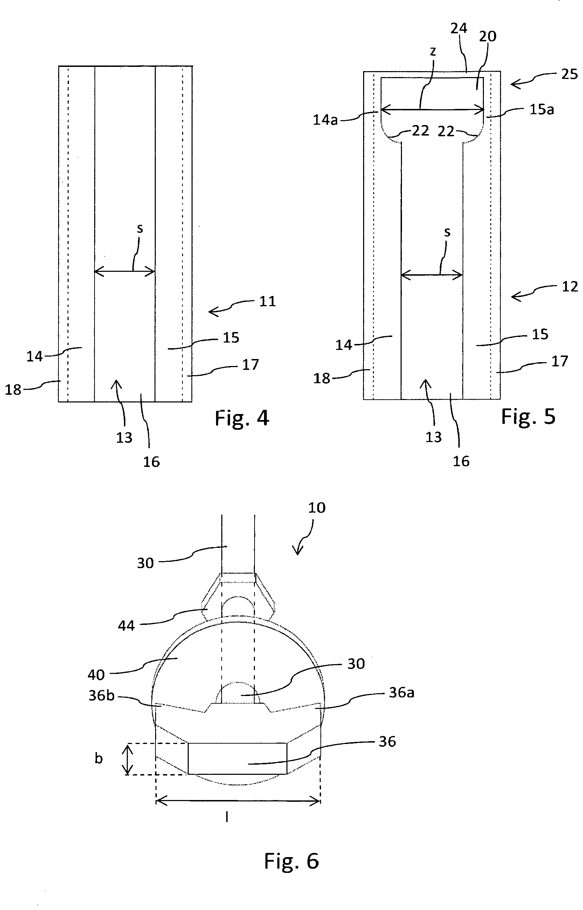

Die Verbindungsanordnung 10 ist in Fig. 3 mit der ersten und mit der zweiten Ankerschiene 11, 12 in Eingriff stehend gezeigt. Sie weist einen längserstreckten Schaft 30 auf, der zumindest abschnittsweise oder sogar vollständig mit einem Außengewinde 31 versehen ist. An einem ersten Längsende 32 des Schafts 30 ist ein erster, bezogen auf den Schaft 30 radial verbreiterter Kopf 36 angeordnet. Gegenüberliegend, das heißt am gegenüberliegenden Längsende 34 ist ein zweiter verbreiterter Kopf 38 vorgesehen. Erster und zweiter Kopf 36, 38 weisen vorliegend einen in etwa rechteckigen Querschnitt in einer Ebene senkrecht zur Axialrichtung oder Längserstreckung des Schafts 30 auf, wie dies zum am Beispiel des Kopfes 36 in den Fig. 6 dargestellt ist.

Die Köpfe 36, 38 sind starr bzw. fest mit dem Schaft 30 verbunden. Ein auf den ersten oder zweiten Kopf 36, 38 einwirkendes Drehmoment mit dem Schaft 30 als Drehachse führt zu einer dementsprechenden Drehbewegung des jeweils anderen Kopfs 38, 36. Erster und zweiter Kopf 36, 38 weisen eine Länge (I) auf, die größer ist als die sich hierzu senkrecht erstreckende Breite (b).

Die Breite (b) von erstem und zweitem Kopf 36, 38 ist typischerweise kleiner als die Breite (s) eines Führungsschlitzes 13 von erster und zweiter Ankerschiene 11, 12, wie diese in den Fig. 4 und 5 dargestellt sind. Zumindest einer von erstem und zweiten Kopf 36, 38 weist in der sich senkrecht zum Schaft erstreckenden Ebene einen Querschnitt auf, welcher größer ist als der Schaftdurchmesser 33. Der Schaftdurchmesser 33 ist generell kleiner als die lichte Breite (s) oder Weite des Führungsschlitzes 13. Auf diese Art und Weise kann der entsprechende Kopf 36, 38 in einer parallelen Ausrichtung zum Führungsschlitz 13 in den Führungsschlitz 13 eingesetzt und mit Erreichen einer Einführposition um einen vorgegebenen Winkel bezüglich des Schafts 30, so etwa um 90° gedreht werden. So kann zum Beispiel der erste Kopf 36 axial gegen ein Herausziehen aus der ersten Ankerschiene 11 gesichert werden. Eine Unterseite des verbreiterten Kopfs 36, wie zum in Fig. 3 gezeigt, kann mit Haltenocken 36a, 36b versehen sein, mit welchen sie mit der Innenseite gegenüberliegender Schenkelabschnitte 14, 15 der ersten Ankerschiene 11 zur Anlage bzw. in Eingriff bringbar ist.

Die Kontur der Haltenocken 36a, 36b kann hierbei an die nach innen bzw. zum Bodenabschnitt 16 der ersten Ankerschiene 11 ragenden freien Enden der Schenkelabschnitte 14, 15 angepasst sein, sodass sich hier eine möglichst voll- oder großflächige wechselseitige Anlagestellung ergibt, mittels derer axiale Kräfte möglichst gut und gleichmäßig zwischen der Verbindungsanordnung 10 und der betreffenden Ankerschiene 11, 12 übertragen bzw. abgefangen werden können.

Die erste Ankerschiene 11 weist ein annähernd rechteckiges Querschnittsprofil auf. Sie weist einen in etwa geradlinigen Bodenabschnitt 16 auf, an dessen Seiten sich Wangenabschnitte 17, 18 in etwa senkrecht zum Bodenabschnitt 16 erstrecken. An den dem Bodenabschnitt 16 abgewandten Enden der Wangenabschnitte 17, 18 sind die nach innen bzw. die aufeinander zu gewandten Schenkelabschnitte 14, 15 angeordnet. Diese können in etwa parallel zum Bodenabschnitt 16 verlaufen, oder aber auch, wie zum Beispiel in Fig. 3 dargestellt, leicht geneigt zum Bodenabschnitt 16 ragen. Zwischen den freien Enden der einander zugewandten Schenkelabschnitte 14, 15 erstreckt sich der Führungsschlitz 13. Die Breite s des Führungsschlitzes 13 ist größer als die Breite b der Köpfe 36, 38, aber schmaler als die Länge I der Köpfe 36, 38.

Jedem der Köpfe 36, 38 ist im vorliegenden Ausführungsbeispiel ferner jeweils ein Abstützelement 40, 42 zugeordnet. Das erste Abstützelement 40 kommt in der in Fig. 3 angedeuteten Endmontagekonfiguration außerhalb der ersten Ankerschiene 11 zu liegen. Es stützt sich axial an den axial außenliegenden Abschnitten der Schenkelabschnitte 14, 15 ab. Das erste Abstützelement 40 ist gleichermaßen, wie auch das zweite Abstützelement 42 entlang dem Schaft 30 beweglich.

Im gezeigten Ausführungsbeispiel weisen die Abstützelemente 40, 42 jeweils ein zentrales Durchgangsloch 41 auf, durch welches sich der Schaft 30 erstreckt. In der sich in Radialrichtung zum Schaft 30 erstreckenden Ebene weisen das erste als auch das zweite Abstützelement 40, 42 eine scheibenartige radialsymmetrische Geometrie auf. Zusätzlich zu den Abstützelementen 40, 42 sind auch erste und zweite Fixierelemente 44, 46 vorgesehen. Vorliegend sind die Fixierelemente 44, 46 als Schraubenmutter ausgebildet, die mit dem Außengewinde 31 des Schafts 30 in Wirkverbindung stehen. Mittels der Fixierelemente 44, 46 kann zwischen den Abstützelementen 40, 42 und den zugehörigen Köpfen 36, 38 eine axiale Klemmwirkung erzeugt werden.

So können beispielsweise die radial nach innen zum Schaft 30 ragenden Schenkelabschnitte 14, 15 der ersten Ankerschiene 11 als auch der zweiten Ankerschiene 12 axial zwischen dem ersten Abstützelement 40 und dem ersten Kopf 36, d.h. bezogen auf die zweite Ankerschiene 12, zwischen dem zweiten Abstützelement 42 und dem zweiten Kopf 38 eingeklemmt werden. Mittels den entlang dem Schaft 30 verstellbaren Fixierelementen 44, 46 kann jeder der beiden Köpfe 36, 38 axial als auch radial, das heißt bezüglich der Längsrichtung der ersten bzw. zweiten Ankerschiene 11, 12 an der betreffenden Ankerschiene 11, 12 gesichert und fixiert werden. Auf diese Art und Weise kann eine kraftübertragende als auch zug- und drucksteife Verbindung zwischen den in ersten und zweiten Betonfertigteilen 1, 2 verankerten Ankerschienen 11, 12 realisiert werden.

Mittels der Ausgestaltung von Haltenocken 36a, 36b am ersten Kopf 36 als auch mittels Haltenocken 38a, 38b am zweiten Kopf 38 und den sich zumindest geringfügig in Axialrichtung zum jeweiligen Bodenabschnitt 16 erstreckenden Schenkelabschnitten 14, 15 von erster Ankerschiene 11 und zweiter Ankerschiene 12 kann eine besonders gute Klemmwirkung erreicht werden, die zum Beispiel auch mit einer geringfügigen plastischen oder elastischen Verformung der geneigten Schenkelabschnitte 14, 15 einhergehen kann.

In der hier gezeigten Ausführungsform mit zumindest erster und zweiter Ankerschiene 11, 12 und einer die Ankerschienen 11, 12 miteinander koppelnden Verbindungsanordnung 10 sind die erste und die zweite Ankerschiene 11, 12 unterschiedlich ausgestaltet, wie dies anhand der Darstellungen der Fig. 4 und 5 deutlich wird. Die erste Ankerschiene 11 weist in Längsrichtung ein kontinuierliches Querschnittsprofil auf, wie dies im Querschnitt in Fig. 3 gezeigt ist. In Abwandlung hiervon weist die zweite Ankerschiene 12 an einem Endabschnitt eine Schlitzverbreiterung 20 auf.

Der in etwa mit dem Führungsschlitz 13 der ersten Ankerschiene 11 korrespondierende Führungsschlitz 13 der zweiten Ankerschiene 12 geht, wie in der Darstellung nach Fig. 5 gezeigt, an einem oberen Ende der zweiten Ankerschiene 12 in einen, bezogen auf die Ausrichtung des Schafts in eine radiale Schlitzverbreiterung 20 über. Die Breite (z) der Schlitzverbreiterung 20 ist hierbei typischerweise größer als die Länge I des zweiten Kopfs 38. Insoweit kann der zweite Kopf 38 auch in Querrichtung, das heißt in einer senkrecht zur Längserstreckung der zweiten Ankerschiene 12 ausgerichteten Stellung axial in die Schlitzverbreiterung 20 eingesetzt werden.

Der zweite Kopf 38 gelangt hierbei gleichermaßen zwischen die gegenüberliegenden Wangenabschnitte 17, 18 der zweiten Ankerschiene 12. Durch eine Verschiebung des zweiten Kopfs 38 in Längsrichtung der zweiten Ankerschiene 12 gelangt der zweite Kopf 38 in den gegenüber der Schlitzverbreiterung 20 verjüngten Führungsschlitz 13, in welchem der zweite Kopf 38 die beiden gegenüberliegenden Schenkelabschnitte 14, 15 der zweiten Ankerschiene 12 hintergreift.

Wie bereits unter Bezugnahme auf den ersten Kopf 36 beschrieben, kann auch der zweite Kopf 38 mittels dem zweiten Abstützelement 42 und dem zweiten Fixierelement 46 klemmend an der zweiten Ankerschiene 12 fixiert werden. Der Übergang 22 von der Schlitzverbreiterung 20 in den geradlinigen, aber verengten Führungsschlitz 13 ist vorliegend gewölbt ausgebildet. Anstelle einer Wölbung kann der Übergang 22 aber auch eine eckigen Absatz oder eine im Wesentlichen geradlinige Schräge aufweisen.

Das in Fig. 5 obenliegende Längsende 25 der zweiten Ankerschiene 12 ist, wie in Fig. 5 gezeigt, ferner mit einer Stirnwand 24 versehen, die einen von Bodenabschnitt 16, Wangenabschnitten 17, 18 und den beiden ausgesparten Schenkelabschnitten 14a, 15a gebildeten Innenraum 21 der zweiten Ankerschiene 12 in Längsrichtung der zweiten Ankerschiene 12 verschließt oder abschließt. Eine derartige Stirnwand 24 ist insbesondere für den flächenbündigen Einbau in ein Betonfertigteil 1, 2 von Vorteil. So kann beim Gießen des Betonfertigteils 1, 2 kein Beton in den Innenraum 21 der zweiten Ankerschiene 12 eindringen. Auf diese Art und Weise bleibt der Innenraum 21 zur Aufnahme des zweiten Kopfs 38 frei.

Gleichermaßen kann auch die erste Ankerschiene eine entsprechende, vorliegend nicht explizit gezeigte Stirnwand aufweisen. Diese kann zudem eine definierte Vormontagestellung, bzw. einen Längsanschlag für den an der ersten Ankerschiene vormontierbaren Kopf bereitstellen.

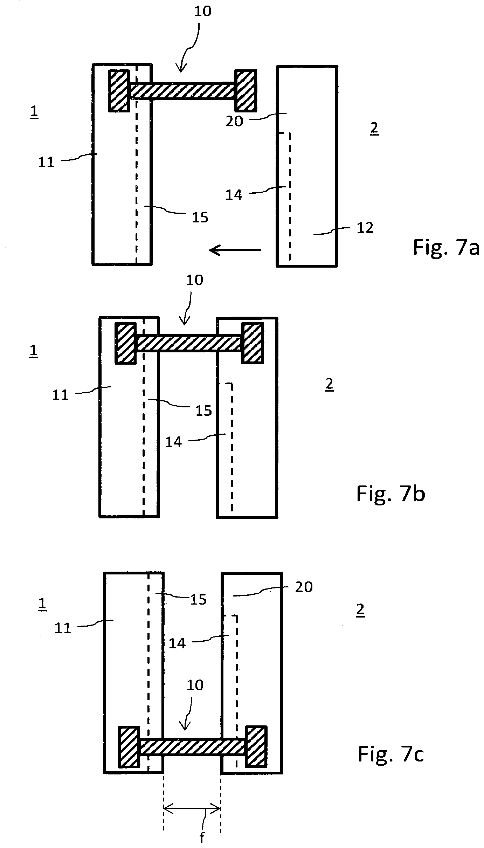

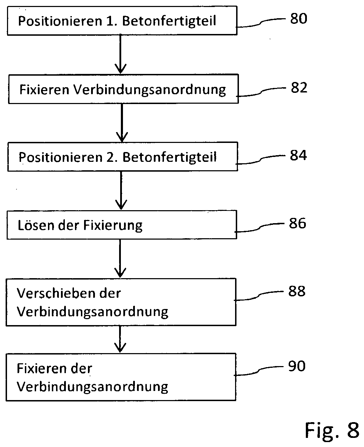

Unter Bezugnahme auf die schematische Darstellung der Fig. 7a bis 7c sowie dem Flussdiagramm der Fig. 8 wird nachfolgend ein typisches Montageszenario zum Verbinden von zumindest zwei Betonfertigteilen 1, 2 beschrieben. Das erste Betonfertigteil 1, typischerweise in Form eines Wandelements, wird in einem ersten Schritt 80 bereitgestellt und bauseits positioniert. Das erste Betonfertigteil 1 ist mit zumindest einer ersten Ankerschiene 11 versehen.

Nach oder bereits vor dem Positionieren des ersten Betonfertigteils 1 wird eine Verbindungsanordnung 10 mit ihrem ersten Kopf 36 in die Ankerschiene 11 eingesetzt. Der erste Kopf 36 kann aber auch bereits vor einem Einbetten der ersten Ankerschiene 11 in das Betonfertigteil 1, sozusagen beim Gießen des ersten Betonfertigteils in die Ankerschiene 11 eingesetzt sein oder anderweitig an dieser verschiebbar positioniert bzw. fixiert sein. In einem nachfolgenden Schritt 82 wird die Verbindungsanordnung 10 an einer vorgegebenen Stelle der ersten Ankerschiene 11, typischerweise an einem oberen Endabschnitt der ersten Ankerschiene 11 fixiert. Jene Fixierung kann typischerweise unter Zuhilfenahme des ersten Abstützelements 40 und des ersten Fixierelements 44 erfolgen.

Hiernach wird in einem nächsten Schritt 84, wie dies aus dem Vergleich der Fig. 7a und 7b hervorgeht, ein mit dem ersten Betonfertigteil 1 korrespondierendes zweites Betonfertigteil 2 in Endmontageposition verbracht. Die am zweiten Betonfertigteil 2 vorgesehene Ankerschiene 12 ist hierbei derart in das zweite Betonfertigteil 2 eingebettet bzw. derart an diesem verankert, dass mit Erreichen der in Fig. 7b gezeigten Endmontageposition der zweite Kopf 38 in der Schlitzverbreiterung 20 zu liegen kommt bzw. über die zweite Schlitzverbreiterung 20 in den Innenraum 21 der zweiten Ankerschiene 12 gelangt.

Durch ein Lösen der Fixierung des ersten Kopfs 36 an der ersten Ankerschiene 11 im Schritt 86 ist die Verbindungsanordnung 10 sowohl gegenüber der ersten Ankerschiene 11 als auch gegenüber der zweiten Ankerschiene 12 längs beweglich. Die Verbindungsanordnung kann alsdann, unterstützt von der Schwerkraft in eine in Fig. 7c angeordnete Endmontagekonfiguration am unteren Ende von erster und zweiter Ankerschiene 11, 12 verbracht werden. In jener Position ist der erste Kopf 36 mit den Schenkelabschnitten 14, 15 der ersten Ankerschiene in Eingriff. Gleichermaßen ist auch der zweite Kopf 38 mit den Schenkelabschnitten 14, 15 der zweiten Ankerschiene 12 in Eingriff. In der in Fig. 7c gezeigten Endmontagestellung der Verbindungsanordnung 10 kann der erste Kopf 36 wiederum mit der ersten Ankerschiene 11 unter Zuhilfenahme des ersten Abstützelements 40 und des ersten Fixierelements 44 starr gekoppelt werden.

Gleichermaßen kann auch der zweite Kopf 38 mittels zugehörigem zweiten Abstützelements 42 und mittels zweitem Fixierelement 46 klemmend mit den Schenkelabschnitten 14, 15 der zweiten Ankerschiene 12 in Wirkverbindung gebracht werden. Insoweit stellen die beiden Ankerschienen 11, 12 mit der Verbindungsanordnung 10 ein druck- und zugstabiles Verbindungssystem 60 zwischen den beiden Betonfertigteilen 1, 2 her.

Die Längsverschiebung der Verbindungsanordnung 10 entlang der ersten Ankerschiene 11 und der zweiten Ankerschiene 12 erfolgt im Schritt 88. Hiernach kann im Schritt 90 zumindest einer von erstem und zweitem Kopf 36, 38 mit zumindest einer der betreffenden Ankerschienen 11, 12 starr verbunden werden. Vorzugsweise werden im Schritt 90 beide Köpfe 36, 38 druck- und zugkraftübertragend mit den ersten und zweiten Ankerschienen 11, 12 unter Zuhilfenahme von erstem und zweitem Fixierelement 44, 46 im Schritt 90 starr verbunden.

Das nach dem vorliegenden Ausführungsbeispiel implementierte Verbindungssystem 60 ermöglicht ein besonders kleines Spaltmaß (f) zwischen den Betonfertigteilen 1, 2. Die Breite (f) der unweigerlich entstehenden Fuge zwischen dem ersten und dem zweiten Betonfertigteil 1, 2 kann hierbei kleiner als 20 mm sein und typischerweise in einem Bereich zwischen 10 und 15 mm liegen. Die Ausgestaltung der Fixierelemente 44, 46 in Form von Schraubenmuttern mit radial außenliegenden Schlüsselflächen ermöglicht ein einfaches sowie intuitives Fixieren der Verbindungsanordnung 10 bzw. deren ersten und/oder zweiten Kopfes 36, 38 an erster und/oder zweiter Ankerschiene 11, 12.

Mittels des druck- und zugfesten Verbindungssystems 60 können Wandaufbauten aus mehreren nebeneinander zu positionierenden Betonfertigteilen 1, 2 besonders einfach und rationell installiert bzw. montiert werden. Durch die druck- und zugfeste Verbindung ist es fortan möglich, lediglich eines oder nur einige wenige Betonfertigteile, so zum Beispiel lediglich ein erstes Betonfertigteil 1 gegen Umfallen zu stützen und abzusichern, während ein mittels des Verbindungssystems 60 mit dem ersten Betonfertigteil 1 verbundenes zweites Betonfertigteil 2 ausschließlich über das Verbindungssystem mit dem ersten Betonfertigteil 1 in Position gehalten und gegen Umfallen gesichert werden kann.

Das zweite Betonfertigteil 2 kann insoweit an das erste Betonfertigteil 1 angehängt werden. Auch können weitere Betonfertigteile an das zweite Betonfertigteil 2 in gleicher Art und Weise angehängt bzw. mit dem zweiten Betonfertigteil verbunden werden. Der Aufwand zum Abstützen und Absichern einzelner Betonfertigteile 1, 2 kann hierdurch deutlich minimiert werden. Durch die besonders schmale Fuge zwischen den Betonfertigteilen 1, 2 kann ein Abschalen der Fugen zum Verfüllen derselben mit Gießmasse entbehrlich werden. Es ist denkbar, die verbleibenden Fugen lediglich mit ausreichend formstabilen Füllmassen auszuspritzen.

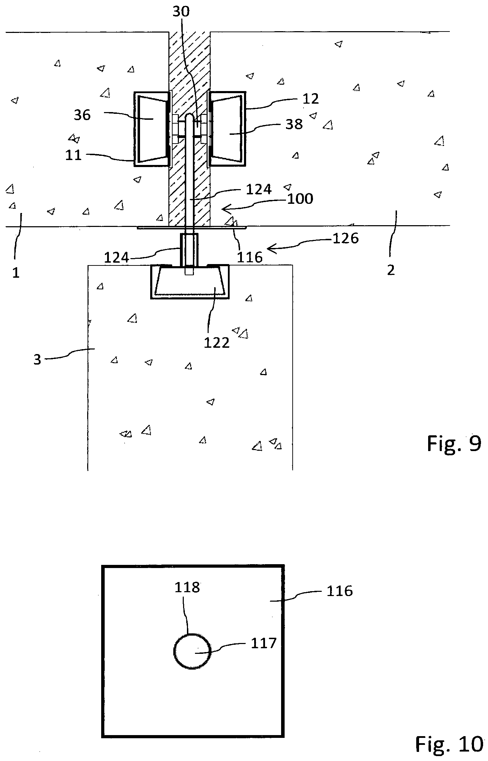

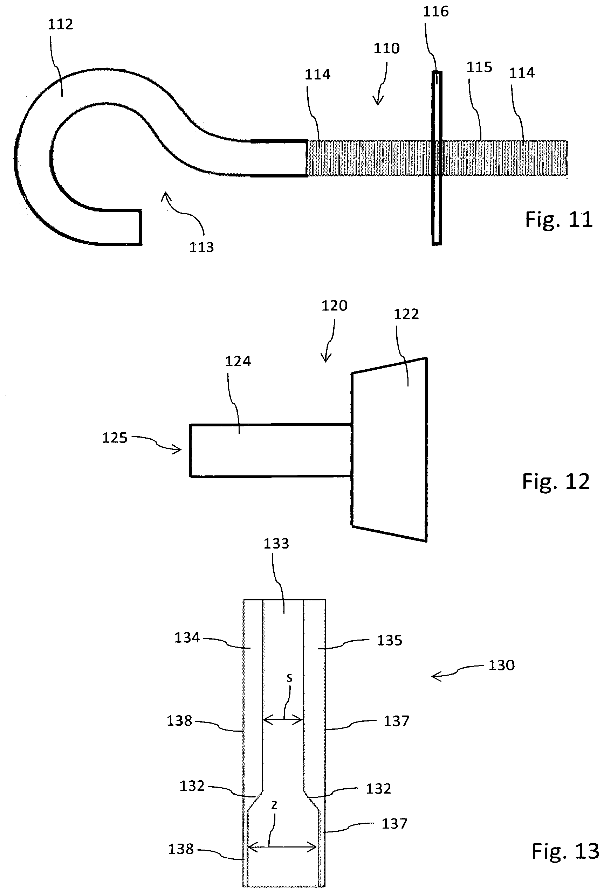

In Fig. 9 ist eine nicht erfindungsgemäße Erweiterung der Verbindungsanordnung 10 gezeigt. Die Verbindungsanordnung 10 weist eine Querverbinderanordnung 100 mit einem Querverbinder 110 sowie mit einem hiermit verbindbaren Verankerungsteil 120 auf. Die einzelnen Komponenten der Querverbinderanordnung 100 in Form des Querverbinders 110 und in Form des Verankerungsteils 120 sind separat in den Fig. 11 und 12 gezeigt. Der Querverbinder 110 weist an einem Ende einen hakenartig ausgestalteten Halteabschnitt 112 auf. Der Haken des Halteabschnitts 112 bildet in etwa einen Dreiviertelkreis, sodass beabstandet zu einem längserstreckten schaftartigen Verbindungsabschnitt 114 eine Hakenöffnung 113 gebildet ist, die eine lichte Weite aufweist, die größer ist als der Durchmesser des Schafts 30 der Verbindungsanordnung 10.

Der Querverbinder 110 kann somit mittels des Halteabschnitts 112 in den sich zwischen erstem und zweitem Kopf 36, 38 erstreckenden Schaft 30 eingehängt werden. Der einstückig mit dem Halteabschnitt 112 verbundene Verbindungsabschnitt 114 weist ein Außengewinde 115 auf. Auf das Gewinde 115, mithin auf den Verbindungsabschnitt 114, ist eine in Fig. 10 separat gezeigte Platte 116 mit einer Durchgangsöffnung 117 aufschiebbar oder aufschraubbar. Die Öffnungsberandung 118 der Durchgangsöffnung 117 kann zum Beispiel als Gewinde ausgestaltet sein, sodass die Platte 116 längen- bzw. positionsveränderlich am Verbindungsabschnitt 114 fixierbar ist.

Die Öffnungsberandung 118 kann aber auch weitgehend konturlos und insoweit lediglich als Umrandung eines kreisrunden Lochs ausgestaltet sein, welches von seinen Abmessungen her passgenau auf das Außengewinde 115 des Verbindungsabschnitts 114 aufschiebbar ist. Von Vorteil weist die Platte und insbesondere ihre Öffnungsberandung 118 eine gewisse Flexibilität oder Elastizität auf, sodass die Platte 116 selbstsichernd entlang dem Außengewinde 115 verschiebbar am Verbindungsabschnitt 114 fixierbar ist.

In montagetechnischer Hinsicht ist insbesondere vorgesehen, den Querverbinder 110 mit daran angeordneter Platte 116 am Schaft 30 der Verbindungsanordnung 10 einzuhängen, sodass sich der längserstreckte Verbindungsabschnitt 115 in etwa senkrecht oder unter einem vorgegebenen Winkel zum Schaft 30 der Verbindungsanordnung 10 erstreckt. Von Vorteil ist insbesondere vorgesehen, dass sich der Verbindungsabschnitt in etwa parallel zur Flächennormale der Außen- oder Innenseite der angrenzenden ersten und/oder zweiten Betonfertigteile 1, 2 erstreckt.

Indem die bevorzugt aus Kunststoff gefertigte Platte 116 positionsveränderlich entlang dem Außengewinde 115 verstellbar fixierbar ist, kann durch entsprechendes Verschieben der Platte 116 gegenüber dem Verbindungsabschnitt 114 die Platte 116 einerseits gegen das erste und das zweite Betonfertigteil 1, 2 in Anlage gebracht werden. Insbesondere kann sich die Platte 116 am ersten und zweiten Betonfertigteil 1, 2 abstützen und somit den Querverbinder 110, insbesondere dessen längserstreckten Verbindungsabschnitt 114 in etwa horizontal in einer Vormontageposition halten und diesen gegen ein schwerkraftbedingtes Herabschwenken sichern.

Ein freies, dem Halteabschnitt 112 abgewandtes Ende des Verbindungsabschnitts 114, welches durch die Durchgangsöffnung 117 der Platte 116 hindurch ragt, ist in der beschriebenen Vormontageposition, in welcher der Querverbinder 110 mit dem Schaft 30 verbunden ist, mit einem Verbindungsschaft 125 des in Fig. 12 separat gezeigten Verankerungsteils 120 verbindbar. Das Verankerungsteil 120 weist neben dem längserstreckten Verbindungsschaft 124 einen demgegenüber radial verbreiterten Kopf, vorliegend einen dritten Kopf 122 auf.

Der Kopf 122 kann radialsymmetrisch, das heißt in etwa pilzförmig verbreitert sein. Es ist aber auch denkbar, dass der Kopf nach Art eines Hammerkopfs ausgestaltet ist, der einen etwa rechteckigen Querschnitt aufweist. Der Verbindungsschaft 124 ist insbesondere hohlzylindrisch ausgestaltet und weist an einem dem Kopf 122 abgewandten freien Ende eine mit einem Innengewinde versehene Einführöffnung auf. Auf diese Art und Weise kann das Verankerungsteil 120 auf den bauseits vormontierten Querverbinder 110 aufgeschraubt und längenveränderlich bzw. positionsveränderlich entlang dem längserstreckten Verbindungsabschnitt 114 fixiert werden.

Ähnlich wie bereits im Zusammenhang mit dem ersten und zweiten Betonfertigteil 1, 2 und deren Wechselwirkung mit der Verbindungsanordnung 10 beschrieben, kann der dritte Kopf 122 in eine in Fig. 13 separat dargestellte Ankerschiene 130 eingeführt werden. Die dritte Ankerschiene 130 ist typischerweise stirnseitig in ein drittes Betonfertigteil 3 eingebettet. Die dritte Ankerschiene weist, ebenso wie die ersten und zweiten Ankerschienen, einen längserstreckten Führungsschlitz 133 der Breite s auf. Jene Breite s ist kleiner als die Breite bzw. der Durchmesser des dritten Kopfs 122.

Der Führungsschlitz 133 geht über einen sich nach außen erweiternden Übergangsbereich 132 in eine Schlitzverbreiterung 131 der Breite z über. Die Breite z ist hierbei größer als der Durchmesser oder die entsprechende Breite des dritten Kopfs 122. Die Ankerschiene 130 weist an ihren Seitenrändern längserstreckte durchgehende Wangenabschnitte 137, 138 auf, die in der vorliegenden Darstellung gemäß Fig. 13 in einem oberen Bereich nach innen ragende Schenkelabschnitte 134, 135 aufweisen, die zwischen sich den Führungsschlitz 133 bilden, in welchem der mit dem Verbindungsabschnitt 114 verbundene Verbindungsschaft 124 verschiebbar ist.

Für die Montage und Befestigung des dritten Betonfertigteils 3 ist vorgesehen, dass das betreffende Betonfertigteil 3 mit der darin eingebetteten Ankerschiene über die Schlitzverbreiterung 131 auf einen bauseits bereits vormontierten dritten Kopf 122 der Querverbinderanordnung 110 aufgesetzt wird. Mit anderen Worten wird bei der Montage des dritten Betonfertigteils 3 der dritte Kopf 122 in die Schlitzverbreiterung 131 eingeführt.

Sobald der radial verbreiterte Kopf 122 zwischen den gegenüberliegenden Wangenabschnitten 137, 138 im Bereich der Schlitzverbreiterung 131 der Ankerschiene 130 zu liegen kommt, ist das typischerweise mittels eines Krans oder eines vergleichbaren Hebezeugs gelagerte Betonfertigteil 3 absenkbar, sodass sich der Kopf 122 in den Bereich des Führungsschlitzes 133 verschiebt.

Dabei hintergreift der verbreiterte Kopf 122 die nach innen ragenden Schenkelabschnitte 134, 135 der dritten Ankerschiene 130, sodass diese axial, das heißt bezüglich der Längserstreckung des Verbindungabschnitts 114 gegenüber dem Querverbinder 110 und somit auch bezüglich der Querverbinderanordnung 100 und den hiermit gekoppelten Betonfertigteilen 1, 2 fixiert ist.

Die verbleibende Fuge 126 kann danach mit Füllmasse ausgespritzt oder mit Ortbeton vergossen werden. Es ist ferner denkbar, dass auch die zwischen dem ersten und zweiten Betonfertigteil 1, 2 gebildete Fuge als auch die zwischen drittem Betonfertigteil 3, zumindest einem von erstem und zweitem Betonfertigteil 1, 2 gebildete Fuge gemeinsam vergossen oder verfüllt werden. Die Verbindungsanordnung und das dementsprechende Verbindungssystem ermöglicht somit nicht nur die Verbindung von parallel ausgerichteten und aneinander angrenzenden Betonfertigteilen, sondern auch eine winklige Anbindung und Verbindung weiterer Betonfertigteile 3 an einer zwischen zwei Betonfertigteilen befindlichen Verbindungsanordnung.

Es versteht sich von selbst, dass das dritte Betonfertigteil 3 durchaus mehrere voneinander beabstandete Ankerschienen 130 aufweist, die jeweils mittels eines Querverbinders 110 und eines zugehörigen Verankerungsteils 120 an einer bereits bestehenden Verbindungsanordnung 10 bzw. an einem dementsprechenden Verbindungssystem 60 befestigbar sind.

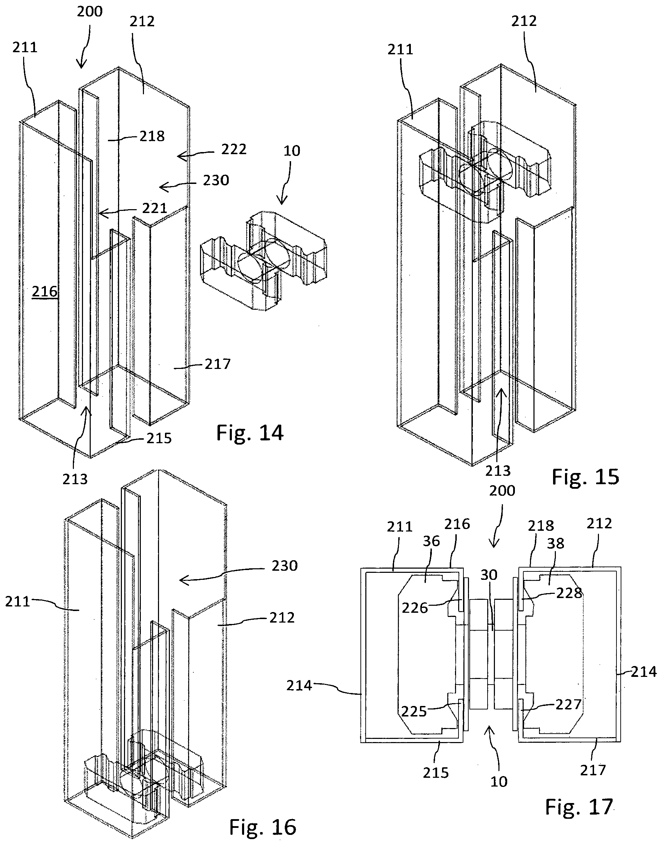

In den Fig. 14 bis 17 ist ein weiteres Ausführungsbeispiel eines Verbindungssystems 200 auf der Basis modifizierter Ankerschienen 211, 212 gezeigt. Die Ankerschienen 211, 212 sind ähnlich zu den zum Beispiel in Fig. 4 und 5 gezeigten Ankerschienen 11 und 12 ausgestaltet. Sie weisen jeweils eine im Wesentlichen geradlinige und längserstreckte Rückwand 214 sowie seitliche und gegenüberliegende Wangenabschnitte 215, 216, 217, 218 auf. An den der Rückwand 214 abgewandten Enden der Wangenabschnitte 215, 216, 217, 218 sind jeweils nach innen ragende Schenkelabschnitte 225, 226, 227, 228 ausgebildet, welche paarweise für jede der Ankerschienen 211, 212 jeweils einen längserstreckten Führungsschlitz 213 bilden. Die Breite des Führungsschlitzes 213 ist größer als der Durchmesser des Schafts 30 der Verbindungsanordnung 10, aber schmäler als die Länge I der Köpfe 36, 38 der Verbindungsanordnung 10.

Im Unterschied zu den Ankerschienen 11, 12 weisen die Ankerschienen 211, 212 jedoch keine Schlitzverbreiterung, sondern jeweils eine seitliche Ausnehmung 221, 222 auf. Die Ankerschiene 211 weist an ihrem oberen Endabschnitt seitliche Ausnehmungen 221 auf, die herstellungstechnisch durch entsprechende Wegnahme oder durch Wegschneiden oder -Fräsen des Wangenabschnitts 215 und des zugehörigen Schenkelabschnitts 225 gebildet ist. Gegenüberliegend dem Wangenabschnitt 215 weist die Ankerschiene 211 einen sich bis zum oberen Endabschnitt der Ankerschiene 211 durchgehend erstreckenden Wangenabschnitt 216 mit einem nach innen ragenden Schenkelabschnitt 226 auf.

Die zweite Ankerschiene 212 ist korrespondierend hierzu ausgestaltet. Auch diese weist einen durchgehenden Wangenabschnitt 218 mit einem nach innen ragenden Schenkelabschnitt 228 auf. Gegenüberliegend weist auch die zweite Ankerschiene 212 einen durch die Ausnehmung 222 unterbrochenen Wangenabschnitt 217 mit daran ausgebildetem Schenkelabschnitt 227 auf.

In Fig. 14 ist eine typische Endmontagekonfiguration der Ankerschienen 211, 212 gezeigt, die sich nach einem bauseitigen Positionieren zugehöriger Betonfertigteile 1, 2 ergibt. Die Ankerschienen 211, 212 sind entsprechend der vorgesehenen Montageposition der zugehörigen Betonfertigteile 1, 2 in etwa in gleicher Höhe an den jeweiligen Betonfertigteilen 1, 2 angeordnet, sodass die Ausnehmungen 221, 222 der Ankerschienen 211, 212 eine gemeinsame Einführöffnung 230 bilden, in welche die Verbindungsanordnung 10 beispielsweise horizontal, das heißt senkrecht zur Längserstreckung der Ankerschienen 211, 212 einführbar ist. Eine derartige Grundkonfiguration ist beispielsweise in Fig. 14 gezeigt.

Fig. 15 zeigt in teils transparenter Darstellung der Ankerschiene 211 die Positionierung der Verbindungsanordnung 10 innerhalb der Profile der Ankerschienen 211, 212 nachdem die Verbindungsanordnung 10 durch die Einführöffnung 230 in die einander zugewandten Ankerschienen 211, 212 eingeführt wurde. Bei korrekter Positionierung und Ausrichtung der miteinander zu verbindenden Betonfertigteile 1, 2 sind die beiden Ankerschienen 211, 212 einander zugewandt und parallel zueinander ausgerichtet, sodass die Verbindungsanordnung 10 etwa unter Schwerkrafteinwirkung vom oberen Bereich der Einführöffnung 230 in einen unteren Bereich der Ankerschienen 211, 212 bewegbar ist.

In diesem unteren Bereich, in welchem jede der beiden Ankerschienen 211, 212 jeweils einen vollständig ausgestalteten seitlichen Wangenabschnitt 215, 216, 217, 218 mit nach innen ragenden Schenkelabschnitten 225, 226, 227, 228 aufweist, hintergreifen die beiden Köpfe 36, 38 der Verbindungsanordnung 10 das von den Wangen- und Schenkelabschnitten gebildete Profil der Ankerschienen, sodass diese, bezogen auf die Längsrichtung des Schafts 30 der Verbindungsanordnung 10 zueinander fixiert sind.

Um ein seitliches Einführung der Verbindungsanordnung 10 in die miteinander korrespondierenden Ankerschienen 211, 212 zu ermöglichen, ist von Vorteil vorgesehen, die Ankerschienen in einander zugewandten Eckbereichen der Betonfertigteile 1, 2 einzubetten.

Aus dem Querschnitt der Fig. 17 ist im Vergleich zum Querschnitt gemäß der Fig. 3 gut erkennbar, dass mittels der Verbindungsanordnung 10 vergleichsweise geringe Spaltmaße zwischen den Betonfertigteilen 1, 2 und den darin eingebetteten Ankerschienen 211, 212 realisierbar sind. Beispielsweise kann das Spaltmaß zwischen den Ankerschienen 211, 212 geringer sein als die Profilbreite oder Profiltiefe der Ankerschienen 11, 12, 211, 212.

### Bezugszeichenliste

- 1: Betonfertigteil
- 2: Betonfertigteil
- 3: Betonfertigteil
- 5: Gebäude
- 6: Betonfertigteil
- 7: Betonfertigteil
- 8: Eckverbindungsanordnung
- 10: Verbindungsanordnung
- 11: Ankerschiene
- 12: Ankerschiene
- 13: Führungsschlitz
- 14: Schenkelabschnitt
- 14a: Schenkelabschnitt
- 15: Schenkelabschnitt
- 15a: Schenkelabschnitt
- 16: Bodenabschnitt
- 17: Wangenabschnitt
- 18: Wangenabschnitt
- 19: Ankerabschnitt
- 20: Schlitzverbreiterung
- 21: Innenraum
- 22: Übergang
- 24: Stirnwand
- 25: Längsende
- 30: Schaft
- 31: Außengewinde
- 32: Erstes Längsende
- 33: Schaftdurchmesser
- 34: Zweites Längsende
- 36: Kopf
- 36a: Haltenocken
- 36b: Haltenocken
- 38: Kopf
- 38a: Haltenocken
- 38b: Haltenocken
- 40: Abstützelement
- 41: Durchgangsloch
- 42: Abstützelement
- 43: Durchgangsloch
- 44: Fixierelement
- 46: Fixierelement
- 60: Verbindungssystem
- 100: Querverbinderanordnung
- 110: Querverbinder
- 112: Halteabschnitt
- 113: Hakenöffnung
- 114: Verbindungsabschnitt
- 115: Gewinde
- 116: Platte
- 117: Durchgangsöffnung
- 118: Öffnungsberandung
- 120: Verankerungsteil
- 122: Kopf
- 124: Verbindungsschaft
- 125: Innengewinde
- 126: Fuge
- 130: Ankerschiene
- 131: Schlitzverbreiterung
- 132: Übergang
- 133: Führungsschlitz
- 134: Schenkelabschnitt
- 135: Schenkelabschnitt
- 137: Wangenabschnitt
- 138: Wangenabschnitt
- 200: Verbindungssystem
- 211: Ankerschiene
- 212: Ankerschiene
- 213: Führungsschlitz
- 214: Rückwand
- 215: Wangenabschnitt
- 216: Wangenabschnitt
- 217: Wangenabschnitt
- 218: Wangenabschnitt
- 221: Ausnehmung
- 222: Ausnehmung
- 225: Schenkelabschnitt
- 226: Schenkelabschnitt
- 227: Schenkelabschnitt
- 228: Schenkelabschnitt
- 230: Einführöffnung

## Patentansprüche

1. Verbindungsanordnung zum Verbinden von zumindest zwei, jeweils mit zumindest einer Ankerschiene (11, 12; 211, 212) versehenen Betonfertigteilen (1, 2), wobei die Verbindungsanordnung (10) einen längserstreckten Schaft (30) mit einem an einem ersten Längsende (32) angeordneten und gegenüber dem Schaftdurchmesser (33) verbreiterten ersten Kopf (36) sowie an einem zweiten Längsende (34) des Schafts (30), welches dem ersten Längsende (32) gegenüberliegt, einen gegenüber dem Schaftdurchmesser (33) verbreiterten zweiten Kopf (38) aufweist, wobei der erste Kopf (36) und der zweite Kopf (38) starr mit dem Schaft (30) verbunden sind, **dadurch gekennzeichnet, dass** dem ersten Kopf (36) ein erstes Abstützelement (40) und ein erstes Fixierelement (44) zugeordnet sind und wobei dem zweiten Kopf (38) ein zweites Abstützelement (42) und ein zweites Fixierelement (46) zugeordnet sind, wobei die Abstützelemente (40, 42) als eine entlang dem Schaft verschiebbare (30) Scheibe mit einem Durchgangsloch (41, 43) zur Aufnahme des Schafts (30) ausgebildet sind und wobei das erste und das zweite Fixierelement (44, 46) als Schraubenmutter ausgebildet sind und mit einem Außengewinde (31) des Schafts (30) zusammenwirken.

2. Verbindungsanordnung nach Anspruch 1, wobei zumindest einer von erstem und zweitem Kopf (36, 38) in einer senkrecht zum Schaft (30) verlaufenden Querschnittebene eine Länge (I) aufweist, die größer ist als eine sich hierzu senkrecht in der Querschnittsebene erstreckende Breite (b).

3. Verbindungsanordnung nach Anspruch 1 oder 2, wobei das erste und das zweite Fixierelement (44, 46) entlang dem Schaft (30) beweglich und am Schaft (30) fixierbar sind.

4. Verbindungsanordnung nach einem der vorhergehenden Ansprüche, wobei mittels der Fixierelemente (44, 46) zwischen den Abstützelementen (40, 42) und den zugehörigen Köpfen (36, 38) eine axiale Klemmwirkung erzeugbar ist.

5. Verbindungsanordnung nach einem der vorhergehenden Ansprüche, wobei radial nach innen zum Schaft (30) ragende Schenkelabschnitte (14, 15) der zumindest einen Ankerschiene (11) axial zwischen dem ersten Abstützelementen (40) und dem ersten Kopf (36) einklemmbar ist.

6. Verbindungssystem zum Verbinden von zumindest zwei Betonfertigteilen (1, 2), mit:
- einer in oder an einem ersten Betonfertigteil (1) verankerbaren ersten Ankerschiene (11; 211),
- einer in oder an einem zweiten Betonfertigteil (2) verankerbaren zweiten Ankerschiene (12; 212), und mit
- einer Verbindungsanordnung nach einem der vorhergehenden Ansprüche, deren erster Kopf (36) in die erste Ankerschiene (11; 211) einführbar ist und deren zweiter Kopf (38) in die zweite Ankerschiene (12; 212) einführbar ist.

7. Verbindungssystem nach Anspruch 6, wobei die erste Ankerschiene (11; 211) und die zweite Ankerschiene (12; 212) jeweils einen sich zwischen zwei nach innen ragenden Schenkelabschnitten (14, 15; 225, 226, 227, 228) erstreckenden Führungsschlitz (13) aufweisen, dessen Schlitzbreite (s) kleiner ist als ein Querschnitt des ersten und des zweiten Kopfs (36, 38).

8. Verbindungssystem nach einem der vorhergehenden Ansprüche 6 oder 7, wobei der Führungsschlitz (13) der zweiten Ankerschiene (12) an zumindest einem Abschnitt eine Schlitzverbreiterung (20) aufweist, deren Breite (z) größer ist als ein Querschnitt des zweiten Kopfs (38).

9. Verbindungssystem nach Anspruch 8, wobei die Schlitzverbreiterung (20) der zweiten Ankerschiene (12) an einem Längsende (25) der zweiten Ankerschiene (12) ausgebildet ist.

10. Verbindungssystem nach einem der vorhergehenden Ansprüche 6 bis 9, wobei zumindest eine der Ankerschienen (211, 212) im Bereich eines seitlichen Wangenabschnitts (215, 217) eine Ausnehmung (221, 222) zum seitlichen Einführen eines Kopfs (36, 38, 122) einer Verbindungsanordnung (10) aufweist.

11. Verbindungssystem nach Anspruch 10, wobei die erste Ankerschiene (211) und die zweite Ankerschiene (212) jeweils an aneinander zugewandten Wangenabschnitten (215, 217) je eine Ausnehmung (221, 222) aufweisen, welche Ausnehmungen sich zu einer Einführöffnung (230) ergänzen, in welche die Verbindungsanordnung (10) einführbar ist.

12. Verbindungssystem nach einem der vorhergehenden Ansprüche 6 bis 11, wobei die Verbindungsanordnung (10) mit zumindest einem ihrer Köpfe (36, 38) an der ersten und/oder an der zweiten Ankerschiene (11; 211, 12; 212) in Eingriff bringbar ist.

13. Betonfertigteilanordnung mit zumindest einem ersten Betonfertigteil (1) und mit einem zweiten Betonfertigteil (2), die mittels zumindest eines Verbindungssystems (60; 200) nach einem der vorhergehenden Ansprüche 6 bis 12 miteinander verbunden sind.

14. Verfahren zum Verbinden eines ersten Betonfertigteils (1) mit zumindest einem zweiten Betonfertigteil (2), mit den Schritten:
- Bereitstellen des ersten Betonfertigteils (1) mit zumindest einer ersten darin verankerten Ankerschiene (11; 211),
- Bereitstellen eines zweiten Betonfertigteils (2) mit zumindest einer zweiten darin verankerten Ankerschiene (12; 212),
- Verbinden von erstem und zweitem Betonfertigteil (1, 2) mittels zumindest einer Verbindungsanordnung (10) nach einem der vorhergehenden Ansprüche 1 bis 5, mittels Einführen des ersten Kopfs (36) in die erste Ankerschiene (11; 211) und mittels Einführen des zweiten Kopfs (38) in die zweite Ankerschiene (12; 212).

## Claims

1. Connection arrangement for connecting at least two prefabricated concrete parts (1, 2) which are each provided with at least one anchor rail (11, 12; 211, 212), wherein the connection arrangement (10) has an elongate shaft (30) with a first head (36) arranged on a first longitudinal end (32) and widened with respect to the shaft diameter (33), and a second head (38), which is widened with respect to the shaft diameter (33), on a second longitudinal end (34) of the shaft (30) that is situated opposite to the first longitudinal end (32), wherein the first head (36) and the second head (38) are rigidly connected to the shaft (30), **characterized in that** the first head (36) is assigned a first supporting element (40) and a first fixing element (44), and wherein the second head (38) is assigned a second supporting element (42) and a second fixing element (46), wherein the supporting elements (40, 42) are designed as discs, which can be displaced along the shaft (30), having a through-hole (41, 43) for receiving the shaft (30), and wherein the first and the second fixing element (44, 46) are designed as screw nuts and interact with an external thread (31) of the shaft (30).

2. Connection arrangement according to Claim 1, wherein at least one of the first and second head (36, 38) has, in a cross section plane running perpendicularly to the shaft (30), a length (1) which is greater than a width (b) extending perpendicularly thereto in the cross section plane.

3. Connection arrangement according to Claim 1 or 2, wherein the first and the second fixing element (44, 46) are movable along the shaft (30) and fixable on the shaft (30).

4. Connection arrangement according to one of the preceding claims, wherein an axial clamping action can be produced between the supporting elements (40, 42) and the associated heads (36, 38) by means of the fixing elements (44, 46).

5. Connection arrangement according to one of the preceding claims, wherein leg portions (14, 15) of the at least one anchor rail (11) that project radially inwardly towards the shaft (30) can be clamped in axially between the first supporting element (40) and the first head (36).

6. Connection system for connecting at least two prefabricated concrete parts (1, 2), having:
- a first anchor rail (11; 211) which can be anchored in or on a first prefabricated concrete part (1),
- a second anchor rail (12; 212) which can be anchored in or on a second prefabricated concrete part (2), and having
- a connection arrangement according to one of the preceding claims, the first head (36) of which can be inserted into the first anchor rail (11; 211) and the second head (38) of which can be inserted into the second anchor rail (12; 212).

7. Connection system according to Claim 6, wherein the first anchor rail (11; 211) and the second anchor rail (12; 212) each have a guide slot (13) which extends between two inwardly projecting leg portions (14, 15; 225, 226, 227, 228) and the slot width (s) of which is smaller than a cross section of the first and of the second head (36, 38).

8. Connection system according to either of the preceding Claims 6 and 7, wherein the guide slot (13) of the second anchor rail (12) has, on at least one portion, a slot widening (20) whose width (z) is greater than a cross section of the second head (38) .

9. Connection system according to Claim 8, wherein the slot widening (20) of the second anchor rail (12) is formed on a longitudinal end (25) of the second anchor rail (12).

10. Connection system according to one of the preceding Claims 6 to 9, wherein at least one of the anchor rails (211, 212) has, in the region of a lateral cheek portion (215, 217), a cutout (221, 222) for laterally inserting a head (36, 38, 122) of a connection arrangement (10).

11. Connection system according to Claim 10, wherein the first anchor rail (211) and the second anchor rail (212) each have a respective cutout (221, 222) on mutually facing cheek portions (215, 217), which cutouts combine to form an insertion opening (230) into which the connection arrangement (10) can be inserted.

12. Connection system according to one of the preceding Claims 6 to 11, wherein the connection arrangement (10) can be engaged by at least one of its heads (36, 38) on the first and/or on the second anchor rail (11; 211, 12; 212).

13. Prefabricated concrete part arrangement having at least one first prefabricated concrete part (1) and having a second prefabricated concrete part (2) which are connected to one another by means of at least one connection system (60; 200) according to one of the preceding Claims 6 to 12.

14. Method for connecting a first prefabricated concrete part (1) to at least one second prefabricated concrete part (2), comprising the following steps:
- providing the first prefabricated concrete part (1) having at least one first anchor rail (11; 211) anchored therein,
- providing a second prefabricated concrete part (2) having at least one second anchor rail (12; 212) anchored therein,
- connecting the first and second prefabricated concrete part (1, 2) by means of at least one connection arrangement (10) according to one of the preceding Claims 1 to 5, by means of inserting the first head (36) into the first anchor rail (11; 211) and by means of inserting the second head (38) into the second anchor rail (12; 212).

## Revendications

1. Agencement de liaison pour la liaison d'au moins deux pièces préfabriquées en béton (1, 2) munies chacune d'au moins un rail d'ancrage (11, 12 ; 211, 212), l'agencement de liaison (10) comprenant une tige allongée (30) dotée d'une première tête (36) agencée à une première extrémité longitudinale (32) et élargie par rapport au diamètre de la tige (33), ainsi qu'à une deuxième extrémité longitudinale (34) de la tige (30), qui est opposée à la première extrémité longitudinale (32), d'une deuxième tête (38) élargie par rapport au diamètre de la tige (33), la première tête (36) et la deuxième tête (38) étant reliées de manière rigide par la tige (30), **caractérisé en ce qu'**un premier élément de support (40) et un premier élément de fixation (44) sont associés à la première tête (36), et un deuxième élément de support (42) et un deuxième élément de fixation (46) sont associés à la deuxième tête (38), les éléments de support (40, 42) étant configurés sous la forme d'un disque déplaçable le long de la tige (30), doté d'un trou de passage (41, 43) pour la réception de la tige (30), et le premier et le deuxième élément de fixation (44, 46) étant configurés sous la forme d'un écrou de vis et coopérant avec un filetage extérieur (31) de la tige (30).

2. Agencement de liaison selon la revendication 1, au moins une parmi la première et la deuxième tête (36, 38) présentant une longueur (1), dans un plan de section transversale s'étendant perpendiculairement à la tige (30), qui est supérieure à une largeur (b) s'étendant perpendiculairement à celle-ci dans le plan de section transversale.

3. Agencement de liaison selon la revendication 1 ou 2, le premier et le deuxième élément de fixation (44, 46) étant mobiles le long de la tige (30) et pouvant être fixés sur la tige (30).

4. Agencement de liaison selon l'une quelconque des revendications précédentes, une action de serrage axial pouvant être produite au moyen des éléments de fixation (44, 46) entre les éléments de support (40, 42) et les têtes correspondantes (36, 38).

5. Agencement de liaison selon l'une quelconque des revendications précédentes, des sections de branche (14, 15) de l'au moins un rail d'ancrage (11) faisant saillie radialement vers l'intérieur vers la tige (30) peuvent être serrées axialement entre les premiers éléments de support (40) et la première tête (36).

6. Système de liaison pour la liaison d'au moins deux pièces préfabriquées en béton (1, 2), comprenant :
- un premier rail d'ancrage (11; 211) pouvant être ancré dans ou sur une première pièce préfabriquée en béton (1),
- un deuxième rail d'ancrage (12 ; 212) pouvant être ancré dans ou sur une deuxième pièce préfabriquée en béton (2), et comprenant :
- un agencement de liaison selon l'une quelconque des revendications précédentes, dont la première tête (36) peut être insérée dans le premier rail d'ancrage (11 ; 211) et dont la deuxième tête (38) peut être insérée dans le deuxième rail d'ancrage (12 ; 212).

7. Système de liaison selon la revendication 6, le premier rail d'ancrage (11 ; 211) et le deuxième rail d'ancrage (12 ; 212) comprenant chacun une fente de guidage (13) s'étendant entre deux sections de branche (14, 15 ; 225, 226, 227, 228) faisant saillie vers l'intérieur, dont la largeur de fente (s) est inférieure à une section transversale de la première et de la deuxième tête (36, 38).

8. Système de liaison selon l'une quelconque des revendications 6 ou 7 précédentes, la fente de guidage (13) du deuxième rail d'ancrage (12) présentant un élargissement de fente (20) au niveau d'au moins une section, dont la largeur (z) est supérieure à une section transversale de la deuxième tête (38).

9. Système de liaison selon la revendication 8, l'élargissement de fente (20) du deuxième rail d'ancrage (12) étant formé à une extrémité longitudinale (25) du deuxième rail d'ancrage (12).

10. Système de liaison selon l'une quelconque des revendications 6 à 9 précédentes, au moins un des rails d'ancrage (211, 212) comprenant un évidement (221, 222) dans la zone d'une section de joue latérale (215, 217), pour l'insertion latérale d'une tête (36, 38, 122) d'un agencement de liaison (10).

11. Système de liaison selon la revendication 10, le premier rail d'ancrage (211) et le deuxième rail d'ancrage (212) comprenant chacun un évidement (221, 222) sur des sections de joue (215, 217) tournées l'une vers l'autre, lesdits évidements se complétant en une ouverture d'insertion (230), dans laquelle l'agencement de liaison (10) peut être inséré.

12. Système de liaison selon l'une quelconque des revendications 6 à 11 précédentes, l'agencement de liaison (10) pouvant être mis en prise avec au moins une de ses têtes (36, 38) sur le premier et/ou sur le deuxième rail d'ancrage (11 ; 211, 12 ; 212).

13. Agencement de pièces préfabriquées en béton comprenant au moins une première pièce préfabriquée en béton (1) et comprenant une deuxième pièce préfabriquée en béton (2), qui sont reliées les unes aux autres au moyen d'au moins un système de liaison (60 ; 200) selon l'une quelconque des revendications 6 à 12 précédentes.

14. Procédé de liaison d'une première pièce préfabriquée en béton (1) à au moins une deuxième pièce préfabriquée en béton (2), comprenant les étapes suivantes :
- la fourniture de la première pièce préfabriquée en béton (1) dotée d'au moins un premier rail d'ancrage (11 ; 211) ancré dans celle-ci,
- la fourniture d'une deuxième pièce préfabriquée en béton (2) dotée d'au moins un deuxième rail d'ancrage (12 ; 212) ancré dans celle-ci,
- la liaison de la première et de la deuxième pièce préfabriquée en béton (1, 2) au moyen d'au moins un agencement de liaison (10) selon l'une quelconque des revendications 1 à 5 précédentes, par insertion de la première tête (36) dans le premier rail d'ancrage (11 ; 211) et par insertion de la deuxième tête (38) dans le deuxième rail d'ancrage (i12 ; 212).
